(19) Europäisches Patentamt
European Patent Office
Office européen des brevets

(11) **EP 4 600 312 A1**

(12) **EUROPEAN PATENT APPLICATION**
published in accordance with Art. 153(4) EPC

(43) Date of publication:
**13.08.2025 Bulletin 2025/33**

(21) Application number: **23888803.6**

(22) Date of filing: **08.11.2023**

(51) International Patent Classification (IPC):
**C09C 1/36** (2006.01)     **C01G 23/04** (2006.01)
**C09D 7/61** (2018.01)     **C09D 11/037** (2014.01)
**C09D 11/17** (2014.01)     **C09D 11/32** (2014.01)
**C09D 201/00** (2006.01)

(52) Cooperative Patent Classification (CPC):
**C01G 23/04; C09C 1/36; C09D 7/61; C09D 11/037;
C09D 11/17; C09D 11/32; C09D 201/00**

(86) International application number:
**PCT/JP2023/041007**

(87) International publication number:
**WO 2024/101458 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2022 JP 2022180116**

(71) Applicant: **Oike & Co., Ltd.**
**Kyoto-shi, Kyoto 600-8461 (JP)**

(72) Inventor: **TOMITA, Akira**
**Kyoto-shi, Kyoto 601-8123 (JP)**

(74) Representative: **Richardt Patentanwälte PartG
mbB
Wilhelmstraße 7
65185 Wiesbaden (DE)**

(54) **BLUE PIGMENT, DISPERSION LIQUID, COATING MATERIAL, INK, AND COATING FILM AND METHOD FOR PRODUCING SAME**

(57) There is provided a blue pigment including titanium oxide. A volume-based cumulative 50% point particle diameter (D50) of the blue pigment is 20 μm or less, and an average thickness of particles of the blue pigment is 130 nm or greater and 170 nm or less. The blue pigment has a Ti atomic concentration of 25 at% or greater and 50 at% or less, and an O atomic concentration of 50 at% or greater and 75 at% or less, where the Ti atomic concentration is a total number of Ti atoms relative to a total number of Ti and O atoms, and the O atomic concentration is a total number of O atoms relative to the total number of Ti and O atoms as determined by an elemental analysis performed by energy dispersive X-ray spectroscopy (EDX).

EP 4 600 312 A1

**Description**

TECHNICAL FIELD

The present invention relates to blue pigments, dispersion liquids, coating materials, inks, coating films, and methods of producing coating films.

BACKGROUND ART

Luster pigments have been widely used industrially for automobile coating materials, decorative coating materials, plastics, printing inks, cosmetic preparations, and the like due to their brilliant decorative effects and excellent design properties.

Patent Document 1 describes a luster pigment that can improve brightness of a blue or green luster pigment. The described luster pigment includes glass flakes, a titanium oxide film formed on each glass flake, and gold particles deposited on the titanium oxide film or arranged between the glass flake and the titanium oxide film.

A gold pigment, which has seamless design properties without coarseness and can achieve a color with an excellent gold tone, is described in Patent Document 2.

CITATION LIST

PATENT DOCUMENT

Patent Document 1: Japanese Unexamined Patent Application Publication No. 2020-76071
Patent Document 2: Japanese Unexamined Patent Application Publication No. 2021-85001

SUMMARY OF THE INVENTION

TECHNICAL PROBLEM

Since the titanium oxide film is formed on each of the glass flakes in the pigment disclosed in Patent Document 1, granules of the pigment are thick, and coarseness appears when a coating film is formed with the pigment. Thus, it is difficult to achieve a seamless metallic tone with metallic gloss using the pigment.

There is no description about a blue pigment in Patent Document 2.

The present invention aims to solve the above-described various problems existing in the related art, and to achieve the following object. Specifically, an object of the present invention is to provide a blue pigment, a dispersion liquid, coating material, ink, and coating film, each including the blue pigment, and a method of producing a coating film including the blue pigment, all of which can have seamless design properties without coarseness, and can achieve an excellent bluish color tone regardless of a form of use (in a form of a powder, in a form of a film, or the like).

SOLUTION TO THE PROBLEM

The means for solving the above problems are as follows.

<1> A blue pigment includes titanium oxide. A volume-based cumulative 50% point particle diameter (D50) of the blue pigment is 20 $\mu$m or less, and an average thickness of particles of the blue pigment is 130 nm or greater and 170 nm or less. The blue pigment has a Ti atomic concentration of 25 at% or greater and 50 at% or less, and an O atomic concentration of 50 at% or greater and 75 at% or less, where the Ti atomic concentration is a total number of Ti atoms relative to a total number of Ti and O atoms, and the O atomic concentration is a total number of O atoms relative to the total number of Ti and O atoms as determined by an elemental analysis performed by energy dispersive X-ray spectroscopy (EDX).

<2> In the blue pigment according to <1>, the particles of the blue pigment have a single-layer structure.

<3> In the blue pigment according to <1> or <2>, the blue pigment has true density of 3.2 g/cm$^3$ or greater.

<4> In the blue pigment according to any one of <1> to <3>, the particles of the blue pigment are scaly particles.

<5> A dispersion liquid includes the blue pigment according to any one of <1> to <4>.

<6> A coating material includes the blue pigment according to any one of <1> to <4>.

<7> An ink includes the blue pigment according to any one of <1> to <4>.

<8> A coating film includes the blue pigment according to any one of <1> to <4>.

<9> In the coating film according to <8>, when the coating film is applied to a substrate, b* and a* of a spectrum of total reflection of the coating film are -17 or less and 5 or less, respectively.

<10> A method of producing a coating film includes applying the dispersion liquid of <5> onto a substrate.

<11> A method of producing a coating film includes applying the coating material of <6> onto a substrate.

<12> A method of producing a coating film includes applying the ink of <7> onto a substrate.

EFFECTS OF THE INVENTION

According to the present invention, the various problems existing in the related art can be solved, the object can be achieved, and there can be provided a blue pigment, a dispersion liquid, coating material, ink, and coating film, each including the blue pigment, and a method of producing a coating film including the blue pigment, all of which can have seamless design properties without coarseness, and can achieve an excellent bluish color tone regardless of a form of use (in a form of a powder, in a form of a film, or the like).

BRIEF DESCRIPTION OF THE DRAWINGS

[Fig. 1] Fig. 1 is a photograph depicting dispersion liquids of Examples 1 to 5 and Comparative Examples 1 to 4.

[Fig. 2A] Fig. 2A is a SEM photograph depicting the long-side surfaces of the particles of the blue pigment of Example 1.

[Fig. 2B] Fig. 2B is a SEM photograph depicting a cross-section of the particles of the blue pigment of Example 1.

[Fig. 3A] Fig. 3A is a SEM photograph depicting the long-side surfaces of the particles of the blue pigment of Example 2.

[Fig. 3B] Fig. 3B is a SEM photograph depicting a cross-section of the particles of the blue pigment of Example 2.

[Fig. 4A] Fig. 4A is a SEM photograph depicting the long-side surfaces of the particles of the blue pigment of Example 3.

[Fig. 4B] Fig. 4B is a SEM photograph depicting a cross-section of the particles of the blue pigment of Example 3.

[Fig. 5A] Fig. 5A is a SEM photograph depicting the long-side surfaces of the particles of the blue pigment of Example 4.

[Fig. 5B] Fig. 5B is a SEM photograph depicting a cross-section of the particles of the blue pigment of Example 4.

[Fig. 6A] Fig. 6A is a SEM photograph depicting the long-side surfaces of the particles of the titanium oxide pigment of Comparative Example 1.

[Fig. 6B] Fig. 6B is a SEM photograph depicting a cross-section of the particles of the titanium oxide pigment of Comparative Example 1.

[Fig. 7A] Fig. 7A is a SEM photograph depicting the long-side surfaces of the particles of the titanium oxide pigment of Comparative Example 2.

[Fig. 7B] Fig. 7B is a SEM photograph depicting a cross-section of the particles of the titanium oxide pigment of Comparative Example 2.

[Fig. 8A] Fig. 8A is a SEM photograph depicting the long-side surfaces of the particles of the blue pigment of Comparative Example 3.

[Fig. 8B] Fig. 8B is a SEM photograph depicting a cross-section of the particles of the blue pigment of Comparative Example 3.

[Fig. 9A] Fig. 9A is a SEM photograph depicting the long-side surfaces of the particles of the blue pigment of Comparative Example 4.

[Fig. 9B] Fig. 9B is a SEM photograph depicting a cross-section of the particles of the blue pigment of Comparative Example 4.

[Fig. 10A] Fig. 10A is a photograph of the coating film formed with the blue pigment of Example 1.

[Fig. 10B] Fig. 10B is a photograph of the coating film formed with the blue pigment of Example 2.

[Fig. 10C] Fig. 10C is a photograph of the coating film formed with the blue pigment of Example 3.

[Fig. 10D] Fig. 10D is a photograph of the coating film formed with the blue pigment of Example 4.

[Fig. 10E] Fig. 10E is a photograph of the coating film formed with the blue pigment of Example 5.

[Fig. 10F] Fig. 10F is a photograph of the coating film formed with the titanium oxide pigment of Comparative Example 1.

[Fig. 10G] Fig. 10G is a photograph of the coating film formed with the titanium oxide pigment of Comparative Example 2.

[Fig. 10H] Fig. 10H is a photograph of the coating film formed with the blue pigment of Comparative Example 3.

[Fig. 10I] Fig. 10I is a photograph of the coating film formed with the blue pigment of Comparative Example 4.

[Fig. 11] Fig. 11 is a diagram depicting the appearances SG (sparkle grade of particles) of the coating films formed with the pigments of Examples 1 to 5 and Comparative Examples 1 to 4, respectively.

[Fig. 12] Fig. 12 is a diagram depicting the appearances CV (color sparkle of particles) of the coating films formed with the pigments of Examples 1 to 5 and Comparative Examples 1 to 4, respectively.

[Fig. 13] Fig. 13 is a SEM photograph of the coating film including the blue pigment of Example 4.

[Fig. 14] Fig. 14 is a SEM photograph of the coating film including the blue pigment of Comparative Example 3.

[Fig. 15] Fig. 15 is an SEM photograph of the coating film including the blue pigment of Comparative Example 4.

## DETAILED DESCRIPTION OF THE EMBODIMENTS

(Blue pigment)

The blue pigment of the present invention includes titanium oxide. A volume-based cumulative 50% point particle diameter (D50) of the blue pigment is 20 $\mu$m or less, and an average thickness of particles of the blue pigment is 130 nm or greater and 170 nm or less. The blue pigment has a Ti atomic concentration of 25 at% or greater and 50 at% or less, and an O atomic concentration of 50 at% or greater and 75 at% or less, where the Ti atomic concentration is a total number of Ti atoms relative to a total number of Ti and O atoms, and the O atomic concentration is a total number of O atoms relative to the total number of Ti and O atoms as determined by an elemental analysis performed by energy dispersive X-ray spectroscopy (EDX).

In the present invention, the blue pigment including titanium oxide, and having thinner particles with a smaller particle size compared to pigments of the related art have seamless design properties without coarseness, and can achieve an excellent bluish color tone regardless of a form of use (in a form of a powder, in a form of a film, or the like).

The titanium oxide is a material having a high refractive index, and a thin film of the titanium oxide exhibits an interference color due to reflected light. The interference color varies depending on a film thickness and a refractive index of the titanium oxide, or the like. For example, in the case where a thin film of the titanium oxide is present in a state in which a top surface and bottom surface of the film are exposed to air and a refractive index of the titanium oxide is approximately 2.3, the titanium oxide film having the thickness of approximately 130 nm to 160 nm exhibits a blue interference color.

The particles of the blue pigment of the present invention are preferably scaly particles. The scaly particles may be also referred to as flake-like particles, plate-like particles, flaky particles, or the like.

In the present invention, the scaly particles mean particles each of which has a substantially flat surface, and has a substantially uniform thickness in a vertical direction with respect to the substantially flat surfaces. In addition, the scaly particles means particles in each of which the thickness is very small and a length of the substantially flat surface is very large. Note that the length of the substantially flat surface is a diameter of a circle having the same projected area as the projected area of a corresponding scaly particle.

The shape of the substantially flat surface is not particularly limited, and may be appropriately selected according to the intended purpose. Examples of the shape include: polygons, such as a substantially rectangular shape, a substantially square shape, a substantially circular shape, a substantially elliptical shape, a substantially triangular shape, a substantially quadrangular shape, a substantially pentagonal shape, a substantially hexagonal shape, a substantially heptagonal shape, and a substantially octagonal shape; random indefinite shapes; and the like.

The particles of the blue pigment preferably have a single-layer structure. Since the particles of the blue pigment have a single-layer structure, the particles of the blue pigment can be made thinner and smaller in particle size than particles of a blue pigment having a laminate structure of the related art. Therefore, the blue pigment can be used for various printing methods, such as inkjet printing or the like. Further, since the particles of the blue pigment have a high aspect ratio, the blue pigment can be used for coating of a coating film that requires a seamless appearance without coarseness.

When the elemental analysis of the blue pigment is performed by energy dispersive X-ray spectroscopy (EDX), a Ti atomic concentration, which is a total number of Ti atoms relative to a total number of Ti atoms and O atoms, is 25 at% or greater and 50 at% or less, preferably 25 at% or greater and 45 at% or less, and more preferably 26 at% or greater and 44 at% or less.

When the elemental analysis of the blue pigment is performed by energy dispersive X-ray spectroscopy (EDX), an O atomic concentration, which is a total number of O atoms relative to a total number of Ti atoms and O atoms, is 50 at% or greater and 75 at% or less, preferably 55 at% or greater and 75 at% or less, and more preferably 56 at% or greater and 74 at% or less.

When the above ranges of the composition ratio is satisfied, a blue pigment that has seamless design properties without coarseness and can achieve an excellent bluish tone regardless of a form of use (a form of a powder, a form of a film, or the like) can be obtained.

The Ti atomic concentration of the blue pigment, which is the total number of Ti atoms relative to the total number of Ti atoms and O atoms, and the O atomic concentration of the blue pigment, which is the total number of O atoms relative to the total number of Ti atoms and O atoms, are measured in the following manner.

Three to five drops of a 10 percent by mass butyl acetate dispersion liquid of the pigment are directly dripped onto a SEM sample stage by a pipette, followed by drying the dispersion liquid on the sample stage. Then, SEM observation of the scaly particles is performed. After focusing on the long-side surfaces of the scaly particles, the atomic concentrations of Ti and O are measured by EDX analysis under the following conditions.

[Conditions]

Energy dispersive X-ray spectrometer (EDX: Energy dispersive X-ray spectrometry, produced by HORIBA, Ltd.)
Pretreatment of observation sample: Pt sputtering for 10 seconds
Analysis conditions: accelerating voltage of 25 kV, current of 10 $\mu$A to 20 $\mu$A (adjusted so that the dead time is to be 20% to 30%), magnification of $\times$100 k, working distance (WD) of 12 mm, and reading time of 120 seconds
The atomic concentrations of Ti and O relative to the total amount (total number of atoms) of Ti and O being 100% are determined from the peaks of the Ti K line and the O K line of the detected elements.

The measurement is performed at 10 points under the above measurement conditions, and the average value is determined as the atomic concentration.

The blue pigment includes titanium oxide, and can further include titanium carbide.

The titanium oxide content in the blue pigment is preferably 90% or greater, and more preferably 95% or greater.

The blue pigment may include a trace of impurities.

The upper limit of the volume-based cumulative 50% point particle diameter (median diameter) D50 of the blue pigment is not particularly limited, as long as the upper limit is 20 $\mu$m or smaller, and may be appropriately selected according to the intended purpose. The upper limit is preferably 18 $\mu$m or smaller, and more preferably 16 $\mu$m or smaller.

The lower limit of the volume-based cumulative 50% point particle diameter (median diameter) D50 of the blue pigment is not particularly limited, and may be appropriately selected according to the intended purpose. The lower limit is preferably 0.5 $\mu$m or larger.

Among the above ranges, the volume-based cumulative 50% point particle diameter D50 of the blue pigment is preferably 0.5 $\mu$m or larger and 20 $\mu$m or smaller, more preferably 0.5 $\mu$m or larger and 18 $\mu$m or smaller, and yet more preferably 0.5 $\mu$m or larger and 16 $\mu$m or smaller.

When the volume-based cumulative 50% point particle diameter D50 is 20 $\mu$m or smaller, a blue pigment that has seamless design properties without coarseness and can achieve an excellent bluish tone regardless of a form of use (a form of a powder, a form of a film, or the like) can be obtained.

The volume-based cumulative 50% point particle diameter D50 is a particle diameter corresponding to a 50% point of a volume-based cumulative distribution of the particle size distribution curve obtained by laser diffractometry, and is an average length of the major axis and the minor axis of the blue pigment particles when the measurement is performed by assuming the nonspherical blue pigment particles to be perfect spheres. However, the actual blue pigment particles are not spherical but scaly with long sides and short sides. Therefore, the value of D50 is different from the actual lengths of the blue pigment particles in the long-side direction (major axis) and the shortside direction (minor axis).

The volume-based cumulative 50% point particle diameter D50 is measured by a laser diffraction/scattering particle size distribution analyzer (device name: Laser Micron Sizer LMS-2000e, produced by SEISHIN ENTERPRISE CO., LTD., wet dispersion unit) using EKINEN F-1 (produced by Japan Alcohol Trading Co., Ltd.) as a solvent, according to laser diffractometry using the Fraunhofer approximation.

The average thickness of the particles of the blue pigment is 130 nm or greater and 170 nm or less, preferably 140 nm or greater and 169 nm or less, and more preferably 142 nm or greater and 168 nm or less. When the average thickness of the blue pigment is 130 nm or greater and 170 nm or less, a blue pigment that has seamless design properties without coarseness and can achieve an excellent bluish tone regardless of a form of use (a form of a powder, a form of a film, or the like) can be obtained.

The average thickness of the particles of the blue pigment is defined as a length of the shortest portion of the scaly blue pigment particles in the three-dimensional directions.

The average thickness is determined by scanning electron microscopic (SEM) observation, an atomic force microscope (AFM), or a stylus profilometer in the following manner. The average thickness of the particles of the blue pigment is the same as the average deposition thickness of the titanium oxide vapor-deposition film.

In the case the observation is performed by a scanning electron microscope (SEM), 3 to 5 drops of a 10 percent by mass butyl acetate dispersion liquid of the pigment are dripped onto a glass plate by a pipette, and the dispersion liquid is dried to form a coating film. The glass plate is cut to expose the cross-section of the pigment, thereby preparing a sample.

The prepared sample is set on a 90°-inclinable sample table so that the cross-section of the coating film is a measurement surface, and the measurement is performed under the following conditions. The cross-sectional portion (thickness) of the pigment is observed at 60 points in total, and the average value is determined as the average thickness.

[Conditions]

Scanning electron microscope (SEM) HITACHI S-4700 (produced by Hitachi, Ltd.)
Pretreatment of observation sample: Pt sputtering for 10 seconds to 20 seconds
Observation conditions: accelerating voltage of 10 kV, various magnifications
In the case where the atomic force microscope (AFM) is used, a nano-size sharp needle (probe) is brought close to the coating film, and the atomic force acting between the needle tip and the coating film (pigment) is detected, thereby detecting the thickness of each pigment particle arranged on the coating film.

In the case where the stylus profilometer is used, a low-concentration dispersion liquid is dripped onto glass, and a stylus is brought into contact with the dispersion liquid. The stylus is then linearly scanned to follow the surface profile due to the thicknesses of the particles of the pigment, thereby measuring the thickness of the particles of the pigment.

The true density of the blue pigment is not particularly limited, and may be appropriately selected according to the intended purpose. The true density of the blue pigment is preferably $3.2$ g/cm$^3$ or greater, more preferably $3.3$ g/cm$^3$ or greater, yet more preferably $3.4$ g/cm$^3$ or greater, and particularly preferably $3.4$ g/cm$^3$ or greater and $5$ g/cm$^3$ or less.

The true density is determined by preparing a measuring sample and measuring the sample in the following manner.

A 10 percent by mass dispersion liquid of the pigment in an amount of 30 g is placed in a petri dish. After spontaneous sedimentation, the supernatant is removed. The resultant sediment is placed in a dryer, and dried at 120°C for 2 hours. After evaporating the solvent, the dried product is cooled to room temperature, and the dried powder is collected. The collected dried powder is subjected to crushing using an agate mortar, and coarse particles are removed by a sieve (opening: 180 $\mu$m). The resultant pigment is measured under the following conditions.

[Conditions]

Measuring device: continuous automatic powder true density measuring device MAT-7000 (produced by SEISHIN ENTERPRISE CO., LTD.)
The continuous automatic powder true density measuring device MAT-7000 is a device that measures true density of powder particles according to liquid phase displacement (pycnometer method).

Sample: 2.2 g to 2.4 g
Solvent: n-butanol
Degassing time: 10 minutes
Waiting time: 3 minutes
Drying time: 0 minutes
Number of measurements performed: once

<Method of producing blue pigment>

A method of producing the blue pigment includes a release-layer formation step, a vapor deposition step, and a releasing step, and may further include other steps A as necessary.

<<Release-layer formation step>>

The release-layer formation step is a step of disposing a release layer on a substrate, and is performed by a release-layer formation unit.

-Substrate-

The substrate is not particularly limited as long as the substrate has a smooth surface, and various substrates can be used as the substrate. Among such substrates, a resin film having flexibility, heat resistance, solvent resistance, and dimensional stability, a metal, and a composite film of the metal and the resin film can be appropriately used.

Examples of the resin film include polyester films, polyethylene films, polypropylene films, polystyrene films, polyimide films, and the like. Examples of the metal include copper foils, aluminum foils, nickel foils, iron foils, alloy foils, and the like. Examples of the composite film of the metal and the resin film include composite films in which any of the above resin films and any of the above metals are laminated.

-Release layer-

As the release layer, various organic materials that can be dissolved in a later releasing step can be used. Further, the organic material deposited and remaining on a titanium oxide vapor-deposition film can function as a protective layer of scaly titanium oxide particles by appropriately selecting the organic material constituting the release layer, and therefore use of such an organic material is preferable.

The protective layer has a function of inhibiting aggregation and oxidation of the scaly titanium oxide particles, elution of the scaly titanium oxide particles into a solvent, and the like. In particular, it is preferable to use the organic material used for the release layer as the protective layer because it eliminates the need to separately provide a surface treatment step.

Examples of the organic material constituting the release layer that can be used as the protective layer include cellulose acetate butyrate (CAB), other cellulose derivatives, polyvinyl alcohol, polyvinyl butyral, polyethylene glycol, polyacrylic acid, polyacrylamide, acrylic acid copolymers, modified nylon resins, rosin resins, polylactic acid, shellac resins, and the like. The above organic materials may be used alone, or in combination. Among the above organic materials, cellulose acetate butyrate (CAB) is preferred in view of an excellent function as a protective layer.

A formation method for the release layer is not particularly limited, and may be appropriately selected according to the intended purpose. Examples of the formation method include inkjet coating, blade coating, gravure coating, gravure offset coating, bar coating, roll coating, knife coating, air-knife coating, comma coating, U-comma coating, AKKU coating, smoothing coating, microgravure coating, reverse roll coating, four-roll coating, five-roll coating, dip coating, curtain coating, slide coating, die coating, spray coating, organic vapor deposition, and the like. The above methods may be used alone or in combination.

<<Vapor deposition step>>

The vapor deposition step is a step of depositing Ti (titanium), TiO, $TiO_2$, $Ti_2O_3$, $Ti_3O_5$ or the like serving as a vapor deposition material on the release layer by vapor deposition, and is performed by a vapor deposition unit. The vapor deposition material can be appropriately selected, and is preferably Ti in view of productivity. In the present invention, vapor deposition is preferably performed in an oxygen atmosphere by feeding an oxygen gas in order to oxidize Ti (titanium). Note that a method of performing vapor deposition without feeding an oxygen gas may be employed as long as a composition ratio satisfying the ranges such that Ti (titanium) is 25 at% or greater and 50 at% or less and O (oxygen) is 50 at% or greater and 75 at% or less.

The feeding rate of the oxygen gas is not particularly limited, and may be appropriately selected according to the intended purpose. The feeding rate of the oxygen gas is preferably 1 L/min or greater and 10 L/min or less.

The average vapor-deposition thickness of the titanium oxide vapor-deposition film is preferably 130 nm or greater and 170 nm or less, more preferably 140 nm or greater and 169 nm or less, and yet more preferably 142 nm or greater and 168 nm or less. Note that the average vapor-deposition thickness of the titanium oxide vapor-deposition film is the same as the average thickness of the blue pigment particles.

When the average vapor-deposition thickness of the titanium oxide vapor-deposition film is 130 nm or greater and 170 nm or less, there are advantages such that seamless design properties without coarseness are achieved and an excellent bluish tone can be achieved regardless of a form of use (in a form of a powder, in a form of a film, or the like).

The average vapor-deposition thickness of the titanium oxide vapor-deposition film is determined in the same manner as the measurement of the average thickness of the particles of the blue pigment in the above section of (Blue pigment).

The vapor deposition is more preferable than plating because a film can be formed on a resin substrate, and a waste liquid is not generated. The vapor deposition is more preferable than sputtering because the degree of vacuum can be increased, and the film formation rate (vapor deposition rate) is high.

The vapor deposition rate of the vapor deposition is 100 Å/sec or greater, and is preferably as high as possible.

Examples of operation factors that affect the shapes, the volume-based cumulative 50% point particle diameter, and the average thickness of the finally obtained blue pigment particles include a film formation method, energy (kinetic energy, a temperature, or the like) of Ti arriving at a substrate, surface free energy of the release layer, collision frequency with an oxygen gas, a material and a temperature, a cooling method and temperature of the substrate, a film formation rate, and the like.

<<Releasing step>>

The releasing step is a step of dissolving the release layer, and is performed by a release unit. The titanium oxide vapor-deposition film (layer including the blue pigment) is released in the releasing step.

A solvent that can dissolve the release layer is not particularly limited as long as the solvent can dissolve the release layer, and may be appropriately selected according to the intended purpose. The solvent is preferably a solvent that can be also used as a solvent of a dispersion liquid of the blue pigment. In the case where the blue pigment is used in the form of an aqueous coating material or an aqueous ink, the solvent is preferably miscible with water.

Examples of the solvent that can dissolve the release layer include: alcohols, such as methanol, ethanol, propanol, isopropanol, butanol, octanol, dodecanol, ethylene glycol, and propylene glycol; ethers, such as tetrahydron; ketones, such as acetone, methyl ethyl ketone, and acetyl acetone; esters, such as methyl acetate, ethyl acetate, butyl acetate, and phenyl acetate; glycol ethers, such as ethyl cellosolve, butyl cellosolve, ethyl carbitol, butyl carbitol, ethylene glycol monomethyl ether, ethylene glycol monoethyl ether, ethylene glycol monoisopropyl ether, ethylene glycol monobutyl ether, ethylene glycol monohexyl ether, ethylene glycol monophenyl ether, diethylene glycol monomethyl ether, diethylene glycol monoethyl ether, diethylene glycol monobutyl ether, diethylene glycol dimethyl ether, diethylene glycol diethyl ether, triethylene glycol monomethyl ether, triethylene glycol monoethyl ether, triethylene glycol monobutyl ether, propylene glycol monomethyl ether, propylene glycol monoethyl ether, dipropylene glycol monomethyl ether, dipropylene glycol monoethyl ether, and diethylene glycol monomethyl ether acetate; phenols, such as phenol and cresol; aliphatic or aromatic hydrocarbons, such as pentane, hexane, heptane, octane, dodecane, tridecane, tetradecane, pentadecane, hexadecane, octadecane, octadecene, benzene, toluene, xylene, trimesic acid, nitrobenzene, aniline, and methoxybenzene; aliphatic or aromatic chlorinated hydrocarbons, such as dichloromethane, chloroform, trichloroethane, chlorobenzene, and dichlorobenzene; sulfur-containing compounds, such as dimethyl sulfoxide; nitrogen-containing compounds, such as dimethylformamide, dimethylacetamide, acetonitrile, propionitrile, and benzonitrile; water; and the like. The above solvents may be used alone or in combination.

As the release layer is dissolved, the film including the blue pigment is released from the substrate, thereby yielding blue pigment particles. Thus, a blue pigment dispersion liquid is obtained without particularly providing a pulverization step, but pulverization and classification may be performed as necessary. In the case where primary particles of the blue pigment particles are aggregated, the aggregated particles may be crushed as necessary.

Further, various processes may be performed for recovering the blue pigment particles, or adjusting the physical properties of the blue pigment particles, as necessary. For example, the particle size of the blue pigment particles may be adjusted by classification; the blue pigment particles may be recovered by centrifugal separation or suction filtration; or a solid content of the blue pigment dispersion liquid may be adjusted. Moreover, solvent substitution may be performed, or viscosity adjustment or the like may be performed using additives. A dispersant may be added. In the present invention, however, a blue pigment dispersion liquid including the blue pigment particles having desired dispersibility can be obtained by selecting an appropriate organic material as the release layer, and therefore a dispersant may not be additionally added.

<<Other steps A>>

Examples of the other steps A include a step of recovering the released blue pigment particles as a dispersion liquid, a step of recovering the blue pigment particles from a dispersion liquid, and the like.

(Dispersion liquid)

The dispersion liquid of the present invention includes the blue pigment of the present invention.

The dispersion liquid of the present invention preferably includes an organic solvent, and can further include other components as necessary.

An example of the dispersion liquid is not particularly limited, and may be appropriately selected according to the intended purpose. For example, the example of the dispersion liquid includes a coating material, an ink, or the like.

-Blue pigment-

The amount of the blue pigment is preferably 0.1 percent by mass or greater and 50 percent by mass or less relative to a total amount of the dispersion liquid.

Note that a dry powder obtained by drying the blue pigment may be used instead of the dispersion liquid.

-Organic solvent-

The organic solvent is not particularly limited, and an organic solvent used for releasing can be used as the organic solvent of the dispersion liquid. Examples of the organic solvent include polyhydric alcohols, polyhydric alcohol alkyl ethers, polyhydric alcohol aryl ethers, nitrogen-containing heterocyclic compounds, amides, amines, ketones, esters, sulfur-containing compounds, and the like. The above organic solvents may be used alone or in combination.

Specific examples of the organic solvent include: alcohols, such as methanol, ethanol, propanol, isopropanol, butanol, octanol, dodecanol, ethylene glycol, and propylene glycol; ethers, such as tetrahydron; ketones, such as acetone, methyl ethyl ketone, and acetyl acetone; and ethers, such as methyl acetate, ethyl acetate, and phenyl acetate. Examples of the polyhydric alcohols include ethylene glycol, diethylene glycol, 1,2-propanediol, 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanetriol, ethyl-1,2,4-butanetriol, 1,2,3-butanetriol, 2,2,4-trimethyl-1,3-pentanediol, and the like.

Examples of the polyhydric alcohol alkyl ethers include ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, propylene glycol monoethyl ether, and the like.

Examples of the polyhydric alcohol aryl ethers include ethylene glycol monophenyl ether, ethylene glycol monobenzyl ether, and the like.

Examples of the nitrogen-containing heterocyclic compounds include 2-pyrrolidone, N-methyl-2-pyrrolidone, N-hydroxyethyl-2-pyrrolidone, 1,3-dimethyl-2-imidazolidinone, ε-caprolactam, γ-butyrolactone, and the like.

Examples of the amides include formamide, N-methylformamide, N,N-dimethylformamide, 3-methoxy-N,N-dimethylpropionamide, 3-butoxy-N,N-dimethylpropionamide, and the like.

Examples of the amines include monoethanol amine, diethanol amine, triethyl amine, and the like.

Examples of the sulfur-containing compounds include dimethyl sulfoxide, sulfolane, thiodiethanol, and the like.

-Other components-

Other components are not particularly limited, and may be appropriately selected according to the intended purpose. Examples of other components include water, buffer solutions, crosslinking agents, anti-aging agents, ultraviolet-ray absorbers, fillers, polymerization inhibitors, surface conditioners, antistatic agents, defoaming agents, viscosity modifiers, light-resistant stabilizers, weather-resistant stabilizers, heat-resistant stabilizer, antioxidants, levelling agents, antiseptic-antifungal agents, rust inhibitors, pH adjusters, and the like.

As the water, for example, pure water or ultrapure water, such as ion-exchanged water, ultrafiltered water, reverse osmosis water, or distilled water, can be used.

As the buffer solution, for example, an acetate buffer solution, a phosphate buffer solution, a citrate buffer solution, a citrate phosphate buffer solution, a borate buffer solution, a tartrate buffer solution, a Tris-buffer solution, a phosphate buffered saline, or a McIlvaine buffer solution can be used.

As the antioxidant, for example, an aromatic compound such as dibutylhydroxytoluene, or a polymer of amino acid, such as gelatin, can be used.

(Coating material)

The coating material of the present invention includes the blue pigment of the present invention.

The coating material of the present invention preferably includes an organic solvent and a binder, and can further include other components as necessary.

-Blue pigment-

The amount of the blue pigment is preferably 0.1 percent by mass or greater and 50 percent by mass or less relative to a total amount of the coating material.

Note that the coating material may optionally include a luster pigment other than the blue pigment. Examples of the luster pigment other than the blue pigment include metal pigments (e.g., aluminum pigments and indium pigment), pigments obtained from natural mica (e.g., pearl pigments), glass flake pigments, and the like.

-Organic solvent-

The organic solvent used in the coating material is the same as or similar to the organic solvent described in the above section of (Dispersion liquid).

-Binder-

The binder is not particularly limited, and may be appropriately selected according to the intended purpose. Examples of the binder include urethane resins, polyester resins, acrylic resins, vinyl acetate-based resins, styrene-based resins, butadiene-based resins, styrene-butadiene-based resins, vinyl chloride-based resins, acryl-styrene-based resins, acryl-silicone-based resins, and the like.
When the coating material includes the binder, the coating material having excellent fixability and dispersibility is obtained.
The amount of the binder is not particularly limited, and may be appropriately selected according to the intended purpose. The amount of the binder is preferably 0.1 percent by mass or greater and 50 percent by mass or less relative to a total amount of the coating material.

-Other components-

Other components included in the coating material are the same as or similar to other components described in the above section of (Dispersion liquid).

(Ink)

The ink of the present invention includes the blue pigment of the present invention.
The ink of the present invention preferably includes an organic solvent and a binder, and may further include other components, as necessary.

-Blue pigment-

The amount of the blue pigment is preferably 0.1 percent by mass or greater and 50 percent by mass or less relative to a total amount of the ink.
Note that the ink may optionally include a luster pigment other than the blue pigment. Examples of the luster pigment other than the blue pigment include metal pigments (e.g., aluminum pigments and indium pigment), pigments obtained from natural mica (e.g., pearl pigments), glass flake pigments, and the like.

-Organic solvent-

The organic solvent used in the ink is the same as or similar to the organic solvent described in the above section of (Dispersion liquid).

-Binder-

The binder is not particularly limited, and may be appropriately selected according to the intended purpose. Examples of the binder include urethane resins, polyester resins, acrylic resins, vinyl acetate-based resins, styrene-based resins, butadiene-based resins, styrene-butadiene-based resins, vinyl chloride-based resins, acryl-styrene-based resins, acryl-silicone-based resins, and the like.
When the ink includes the binder, the ink having excellent fixability and dispersibility can be obtained.
The amount of the binder is not particularly limited, and may be appropriately selected according to the intended purpose. The amount of the binder is preferably 0.1 percent by mass or greater and 50 percent by mass or less relative to a total amount of the ink.

-Other components-

Other components included in the ink are the same as or similar to other components described in the above section of (Dispersion liquid).

(Coating film)

The coating film of the present invention includes the blue pigment of the present invention.
When the coating film is applied to a substrate, L* of a spectrum of the total reflection of the coating film is not particularly limited, and may be appropriately selected according to the intended purpose. The value of L* of the spectrum of the total reflection of the coating film is preferably 40 or greater and 80 or less, more preferably 40 or greater and 70 or less, yet more preferably 40 or greater and 65 or less, and particularly preferably 40 or greater and 60 or less.

When the coating film is applied to a substrate, a* of the spectrum of the total reflection of the coating film is not particularly limited, and may be appropriately selected according to the intended purpose. The value of a* of the spectrum of the total reflection of the coating film is preferably -20 or greater and 5 or less, more preferably -20 or greater and 2 or less, and yet more preferably -18 or greater and 1 or less.

When the coating film is applied to a substrate, b* of the spectrum of the total reflection of the coating film is not particularly limited, and may be appropriately selected according to the intended purpose. The value of b* of the spectrum of the total reflection of the coating film is preferably -10 or less, more preferably -15 or less, yet more preferably -18 or less, particularly preferably -40 or greater and -18 or less, and the most preferably -35 or greater and -18 or less.

When the coating film is applied to a substrate, C* of the spectrum of the total reflection of the coating film is not particularly limited, and may be appropriately selected according to the intended purpose. The value of C* of the spectrum of the total reflection of the coating film is preferably 10 or greater, more preferably 15 or greater, yet more preferably 18 or greater, particularly preferably 18 or greater and 40 or less, yet further more preferably 18 or greater and 35 or less.

When the coating film is applied to a black ABS substrate by bar coating, L* of a spectrum of the total reflection of the coating film is not particularly limited, and may be appropriately selected according to the intended purpose. The value of L* of the spectrum of the total reflection of the coating film is preferably 40 or greater and 80 or less, more preferably 40 or greater and 70 or less, yet more preferably 40 or greater and 60 or less, and particularly preferably 40 or greater and 55 or less.

When the coating film is applied to the black ABS substrate by bar coating, a* of the spectrum of the total reflection of the coating film is not particularly limited, and may be appropriately selected according to the intended purpose. The value of a* of the spectrum of the total reflection of the coating film is preferably -20 or greater and 0 or less, and more preferably -18 or greater and -2 or less.

When the coating film is applied to the black ABS substrate by bar coating, b* of the spectrum of the total reflection of the coating film is not particularly limited, and may be appropriately selected according to the intended purpose. The value of b* of the spectrum of the total reflection of the coating film is preferably -10 or less, more preferably -15 or less, yet more preferably -18 or less, particularly preferably -40 or greater and -18 or less, and the most preferably -35 or greater and - 18 or less.

When the coating film is applied to the black ABS substrate by bar coating, C* of the spectrum of the total reflection of the coating film is not particularly limited, and may be appropriately selected according to the intended purpose. The value of C* of the spectrum of the total reflection of the coating film is preferably 10 or greater, more preferably 15 or greater, yet more preferably 18 or greater, particularly preferably 18 or greater and 50 or less, and yet further more preferably 18 or greater and 40 or less.

When the coating film is applied to a transparent acrylic substrate by bar coating, L* of a spectrum of the total reflection of the coating film is not particularly limited, and may be appropriately selected according to the intended purpose. The value of L* of the spectrum of the total reflection of the coating film is preferably 40 or greater and 80 or less, more preferably 40 or greater and 70 or less, yet more preferably 40 or greater and 65 or less, and particularly preferably 40 or greater and 60 or less.

When the coating film is applied to the transparent acrylic substrate by bar coating, a* of the spectrum of the total reflection of the coating film is not particularly limited, and may be appropriately selected according to the intended purpose. The value of a* of the spectrum of the total reflection of the coating film is preferably - 20 or greater and 5 or less, and more preferably -10 or greater and 5 or less.

When the coating film is applied to the transparent acrylic substrate by bar coating, the upper limit value of b* of the spectrum of the total reflection of the coating film is not particularly limited, and may be appropriately selected according to the intended purpose. The upper limit value of b* of the spectrum of the total reflection of the coating film is preferably -10 or less, more preferably -15 or less, and yet more preferably -20 or less. When the coating film is applied to the transparent acrylic substrate by bar coating, the lower limit value of b* of the spectrum of the total reflection of the coating film is not particularly limited, and may be appropriately selected according to the intended purpose. The lower limit value of b* of the spectrum of the total reflection of the coating film is preferably -40 or greater, and more preferably -35 or greater. Among the above ranges, the value of b* of the spectrum of the total reflection of the coating film is preferably -40 or greater and -15 or less, and more preferably -35 or greater and -15 or less.

When the coating film is applied to the transparent acrylic substrate by bar coating, C* of the spectrum of the total reflection of the coating film is not particularly limited, and may be appropriately selected according to the intended purpose. The value of C* of the spectrum of the total reflection of the coating film is preferably 10 or greater, more preferably 15 or greater, yet more preferably 20 or greater, particularly preferably 20 or greater and 50 or less, and yet further more preferably 20 or greater and 40 or less.

The spectrum of the total reflection of the coating film is measured in the following manner. The bar-coated surface is set as a measuring surface. After measuring a baseline using a standard white substrate prepared with barium sulfate, a spectrum of total reflection of each coated substrate is measured in a wavelength range of 300 nm to 800 nm by a UV-VIS-NIR spectrophotometer (SolidSpec-3700, produced by Shimadzu Corporation), and L*, a*, b*, and C* are determined from the obtained spectrum.

The value of C* is calculated according to the following equation 1.

[Math. 1]

$$C^* = (a^{*2} + b^{*2})^{1/2}$$

(Equation 1)

The black ABS substrate is a black ABS (acrylonitrile (A)-butadiene (B)-styrene (S)) resin film. As the black ABS substrate, a commercially available product, such as Super Sheet HA-ABS (produced by Showa Denko Materials Co., Ltd.) and the like, can be used.

The transparent acrylic substrate is a transparent acrylic resin film. As the transparent acrylic substrate, a commercially available product, such as Acrylite (produced by Mitsubishi Chemical Corporation) and the like, can be used.

When the coating film is applied to the black ABS substrate by bar coating, specular gloss Gs (20°) of the coating film at an incident angle of 20° is not particularly limited, and may be appropriately selected according to the intended purpose. The specular gloss Gs (20°) of the coating film at the incident angle of 20° is preferably 3 or greater and 30 or less, more preferably 5 or greater and 30 or less, and yet more preferably 7 or greater and 30 or less.

When the coating film is applied to the black ABS substrate by bar coating, the specular gloss Gs (60°) of the coating film at an incident angle of 60° is not particularly limited, and may be appropriately selected according to the intended purpose. The specular gloss Gs (60°) of the coating film at the incident angle of 60° is preferably 20 or greater and 60 or less, more preferably 30 or greater and 50 or less, and yet more preferably 33 or greater and 50 or less.

The specular gloss of the coating film is measured by setting the bar-coated surface as a measuring surface, and measuring the measuring surface at incident angles of 20° and 60° by a gloss meter (VG-7000, produced by NIPPON DENSHOKU INDUSTRIES CO., LTD.) according to a parallel light method complied with JIS Z8741 "Specular glossiness-Methods of measurement."

When the coating film is applied to the black ABS substrate by bar coating, the appearance (SG: sparkle grade of particles) of the coating film is not particularly limited, and may be appropriately selected according to the intended purpose. The value of the appearance (SG: sparkle grade of particles) of the coating film is preferably 0 or greater and 10 or less, more preferably 0 or greater and 5 or less, and yet more preferably 0 or greater and 3 or less.

When the coating film is applied to the black ABS substrate by bar coating, the appearance (CV: color sparkle of particles) of the coating film is not particularly limited, and may be appropriately selected according to the intended purpose. The value of the appearance (CV: color sparkle of particles) of the coating film is preferably 0 or greater and 10 or less, more preferably 0 or greater and 5 or less, and yet more preferably 1 or greater and 5 or less.

When the coating film is applied to the black ABS substrate by bar coating, the appearance (C: coarseness) of the coating film is not particularly limited, and may be appropriately selected according to the intended purpose. The value of the appearance (C: coarseness) of the coating film is preferably 0 or greater and 10 or less, more preferably 0 or greater and 5 or less, and yet more preferably 0 or greater and 3 or less.

When the coating film is applied to the black ABS substrate by bar coating, the color (L*) of the coating film is not particularly limited, and may be appropriately selected according to the intended purpose. The value of the color (L*) of the coating film is preferably 10 or greater and 30 or less, more preferably 10 or greater and 25 or less, and yet more preferably 12 or greater and 25 or less.

When the coating film is applied to the black ABS substrate by bar coating, the color (C*) of the coating film is not particularly limited, and may be appropriately selected according to the intended purpose. The value of the color (C*) of the coating film is preferably 5 or greater and 30 or less, more preferably 10 or greater and 30 or less, yet more preferably 10 or greater and 25 or less, yet even more preferably 10 or greater and 20 or less, and particularly preferably 10 or greater and 17 or less.

When the coating film is applied to the black ABS substrate by bar coating, the color (h) of the coating film is not particularly limited, and may be appropriately selected according to the intended purpose. The value of the color (h) of the coating film is preferably 200 or greater and 300 or less, more preferably 210 or greater and 290 or less, yet more preferably 220 or greater and 280 or less, and yet further more preferably 230 or greater and 270 or less.

The appearance and color of the coating film are measured by setting the bar-coated surface as a measuring surface, and measuring the measuring surface by a portable multi-angle spectrophotometer (MA-T6, produced by X-Rite, Inc.). The values of the appearance are measurement values at a light source angle of 15° and a light-receiving angle of 15° (15as15) based on optical geometric conditions defined in the designated portable multi-angle spectrophotometer. The values of the color are measurement values at a light source angle of 45° and a light-receiving angle of 45° (45as45) based on optical geometric conditions defined in the designated portable multi-angle spectrophotometer.

(Method of producing coating film)

The method of producing a coating film of the present invention includes a step of applying the dispersion liquid of the present invention, the coating material of the present invention, or the ink of the present invention onto a substrate, and may further include other steps B.

The substrate is not particularly limited, and various substrate can be used as the substrate. Examples of the substrate include: resin films, such as ABS (acrylonitrile (A)-butadiene (B)-styrene (S)) and acrylics; glass; metals; composite films of a metal and a resin film; and the like.

The coating film of the present invention can be produced using the dispersion liquid of the present invention, the coating material of the present invention, or the ink of the present invention.

A method of applying the dispersion liquid, coating material, or ink including the blue pigment onto the substrate is not particularly limited, and may be appropriately selected according to the intended purpose. Examples of the method include spin coating, inkjet coating, spray coating, screen coating, offset coating, blade coating, gravure coating, gravure offset coating, bar coating, roll coating, knife coating, air-knife coating, comma coating, U-comma coating, AKKU coating, smoothing coating, microgravure coating, reverse roll coating, four-roll coating, five-roll coating, dip coating, curtain coating, slide coating, die coating, drip coating, and the like. The above methods may be used alone or in combination. Among the above methods, spin coating, inkjet coating, bar coating, and drip coating are particularly preferred because seamless design properties without coarseness can be achieved and an excellent bluish tone can be achieved.

<Other steps B>

Examples of other steps B include a drying step performed after the step of applying the dispersion liquid of the present invention, the coating material of the present invention, or the ink of the present invention onto the substrate, and the like.

<Use>

Since the blue pigment of the present invention has seamless design properties without coarseness and can achieve an excellent bluish tone regardless of a form of use (in a form of a powder, in a form of a film, or the like), the blue pigment can be widely used in various fields. For example, the blue pigment is used for luster inks for inkjet printing or other printing, luster coating materials for coating in the application of automobile exterior or interior decorative members, home appliances, building materials, or the like, conductive pigments of conductive pastes, luster pigments for imparting a metallic design to decorative films, luster pigments used for metallic filaments for 3D printers, luster pigments kneaded into metallic design sheets or films by melt extrusion or casting, or the like.

Examples

Examples of the present invention will be described hereinafter, but the present invention is not limited to these examples in any way.

(Example 1)

A solution including cellulose acetate butyrate (CAB) in the amount of 5 percent by mass was applied onto a polyethylene terephthalate (PET) film having the average thickness of 12 $\mu$m by gravure coating, and the applied solution was dried at 110°C or higher and 120°C or lower to form a release layer. The applied amount of the cellulose acetate butyrate (CAB) was 0.06 g/m$^2$ $\pm$ 0.01 g/m$^2$. Ti was deposited on the release layer by vapor deposition at a vapor deposition rate of 385 Å/sec, and an oxygen gas was fed into the space in which Ti reached the substrate at the rate of 5.51 L/min, thereby forming a titanium oxide vapor-deposition film having the average vapor-deposition thickness of 143 nm in the oxygen atmosphere.

Next, butyl acetate was sprayed onto the surface of the PET film on which the release layer and the titanium oxide vapor-deposition film were formed to dissolve the release layer, and the titanium oxide vapor-deposition film was scraped off by a doctor blade. The resultant titanium oxide particles were scaly.

Next, the obtained mixture of the titanium oxide particles and butyl acetate was pulverized using a pulverizer. In the manner as described above, the scaly titanium oxide particles having a single-layer structure were obtained as a blue pigment.

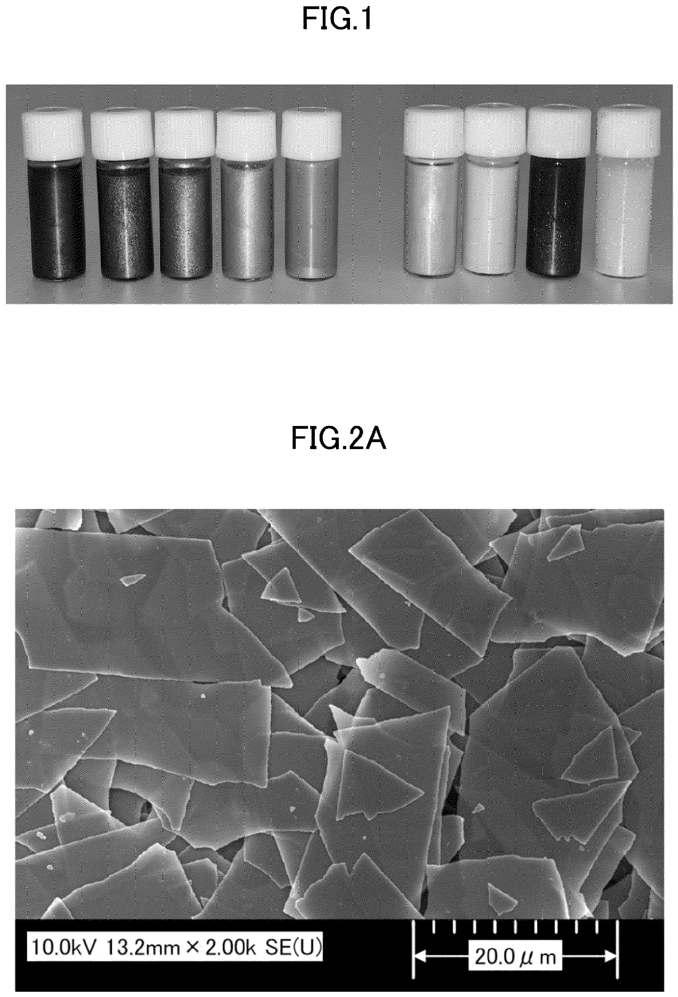

The photograph of the 10 percent by mass dispersion liquid of the blue pigment of Example 1 is presented on the left side of Fig. 1.

(Examples 2 to 5 and Comparative Examples 1 to 2)

Scaly titanium oxide particles as blue pigments of Examples 2 to 5 and titanium oxide particles of Comparative Examples 1 and 2 were obtained in the same manner as in Example 1, except that the vapor deposition conditions were changed to the vapor deposition conditions presented in Table 1.

The pigment of Example 5 was obtained by further pulverizing the pigment of Example 4 by a wet pulverizing device to reduce the particle size.

Note that all of the scaly titanium oxide particles of Examples 2 to 5 and Comparative Examples 1 and 2 had a single-layer structure.

The photograph of the 10 percent by mass dispersion liquid of the blue pigment of Example 2 was presented at the second from the left side of FIG. 1.

The photograph of the 10 percent by mass dispersion liquid of the blue pigment of Example 3 was presented at the third from the left side of FIG. 1.

The photograph of the 10 percent by mass dispersion liquid of the blue pigment of Example 4 was presented at the fourth from the left side of FIG. 1.

The photograph of the 10 percent by mass dispersion liquid of the blue pigment of Example 5 was presented at the fifth from the left side of FIG. 1.

The photograph of the 10 percent by mass dispersion liquid of the titanium oxide pigment of Comparative Example 1 was presented at the sixth from the left side of FIG. 1.

The photograph of the 10 percent by mass dispersion liquid of the titanium oxide pigment of Comparative Example 2 was presented at the seventh from the left side of FIG. 1.

[Table 1]

| | Vapor deposition conditions | | | | Physical properties of pigment | | | | |
| | Ti content [%] | Fed gas | | Deposition rate [Å/sec] | Average thickness [nm] | Median diameter (D50) [$\mu$m] | True density [g/cm³] | EDX (atomic concentration) [%] | |
| | | Type | Feeding rate [L/min] | | | | | Ti | O |
| Ex. 1 | ≥ 99.8 | $O_2$ | 5.51 | 385 | 143 | 15.32 | 3.61 | 43.91 | 56.09 |
| Ex. 2 | ≥ 99.8 | $O_2$ | 5.29 | 342 | 157 | 15.18 | 3.49 | 31.77 | 68.23 |
| Ex. 3 | ≥ 99.8 | $O_2$ | 5.14 | 311 | 158 | 15.10 | 3.46 | 31.60 | 68.40 |
| Ex. 4 | ≥ 99.8 | $O_2$ | 4.89 | 305 | 166 | 15.04 | 3.41 | 26.45 | 73.55 |
| Ex. 5 | ≥ 99.8 | $O_2$ | 4.89 | 305 | 166 | 8.60 | 3.41 | 26.45 | 73.55 |
| Comp. Ex. 1 | ≥ 99.8 | $O_2$ | 5.19 | 338 | 86 | 9.90 | 3.38 | 24.86 | 75.13 |
| Comp. Ex. 2 | ≥ 99.8 | $O_2$ | 5.19 | 251 | 163 | 9.08 | 3.12 | 24.10 | 75.90 |
| Comp. Ex. 3 | - | - | - | - | 725 | 20.60 | - | - | - |
| Comp. Ex. 4 | - | - | - | - | 1.3 $\mu$m | 81.71 | - | - | - |

(Comparative Example 3)

As a blue pigment, Chromashine (registered trademark) MBL20-X produced by TOYO ALUMINIUM K.K. was used in Comparative Example 3.

Chromashine (registered trademark) MBL20-X is a pigment having a laminate structure, in which surfaces of aluminum powder flakes serving as substrates are each coated with silica, and each coated surface is further plated with silver.

The photograph of the 10 percent by mass dispersion liquid of the blue pigment of Comparative Example 3 is presented at the eighth from the left side of Fig. 1.

(Comparative Example 4)

As the blue pigment, Metashine (registered trademark) GT1080RB (Blue) produced by Nippon Sheet Glass Co., Ltd. was used in Comparative Example 4.
Metashine (registered trademark) GT1080RB (Blue) is an inorganic pigment having a laminate structure, in which surfaces of glass flakes serving as substrates are each coated with a metal or a metal oxide.
The photograph of the 10 percent by mass dispersion liquid of the blue pigment of Comparative Example 4 is presented at the ninth from the left side of Fig. 1.
Next, the pigments of Examples 1 to 5 and Comparative Examples 1 to 4 were subjected to measurement of the average thickness and the volume-based cumulative 50% point particle diameter (D50) in the following manner. Note that the thickness of the particle of the pigment is the same as the thickness of the vapor-deposition film of the pigment. The results are presented in Table 1.

<Average thickness>

Three to five drops of a 10 percent by mass butyl acetate dispersion liquid of the corresponding pigment was dripped onto a glass plate by a pipette, and the dispersion liquid was dried. The glass plate was cut to expose the cross-section of the pigment thereby preparing a sample. The prepared sample was set on a 90°-inclinable sample table so that the cross-section of the coating film served as a measurement surface, and the measurement was performed under the following conditions. The cross-section (thickness) of the scaly particles (pigment) was observed at 60 points in total, and the average value was determined as the average thickness.

[Conditions]

Scanning electron microscope (SEM) HITACHI S-4700 (produced by Hitachi, Ltd.)
Pretreatment of observation sample: Pt sputtering for 10 seconds to 20 seconds
Observation conditions: accelerating voltage of 10 kV, various magnifications

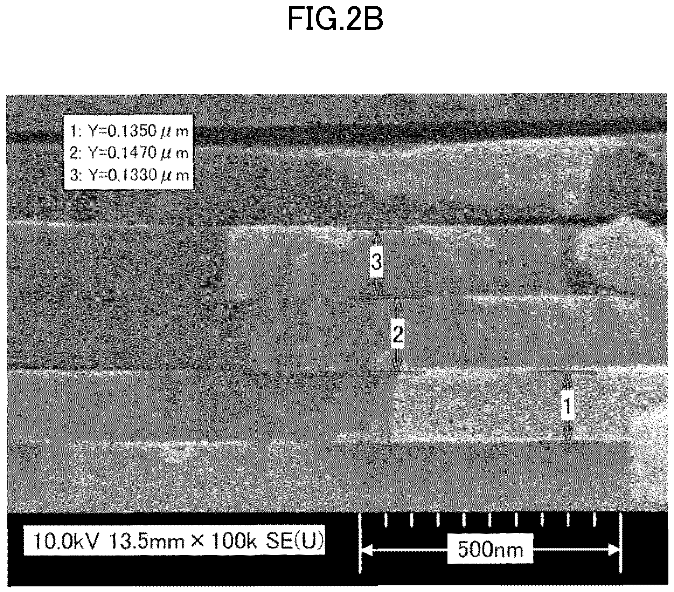

Fig. 2A illustrates a SEM photograph of the long-side surfaces of the particles of the blue pigment of Example 1, and Fig. 2B illustrates a SEM photograph of the cross-section of the particles of the blue pigment of Example 1.

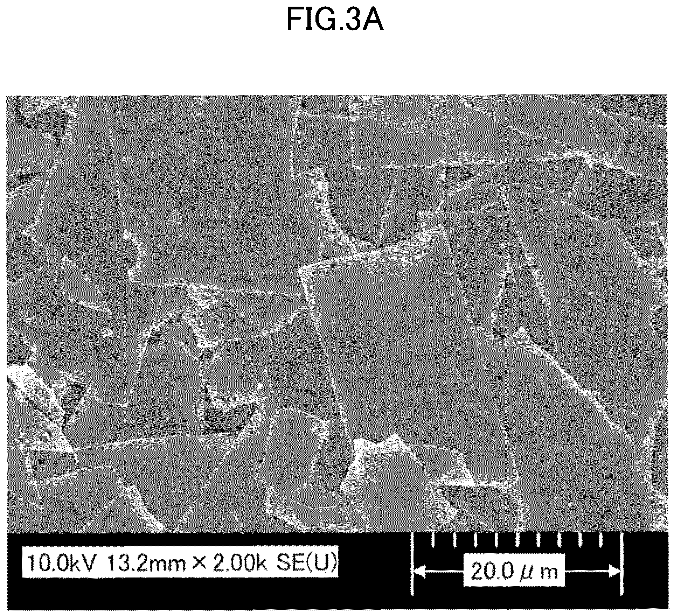

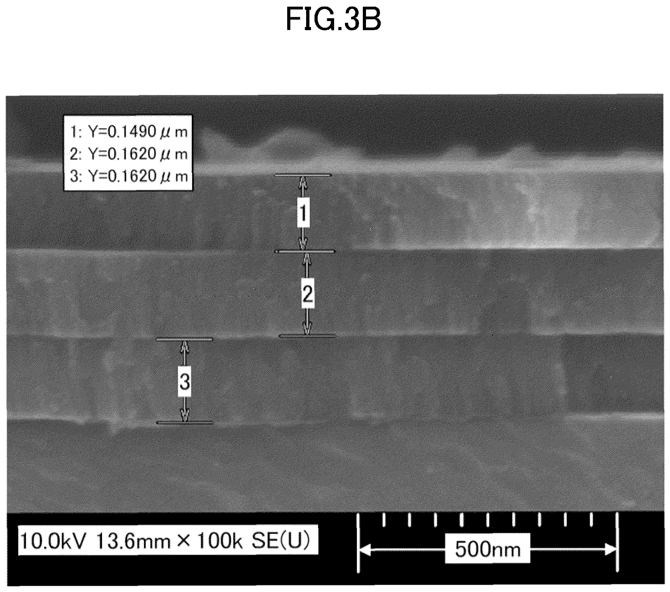

Fig. 3A illustrates a SEM photograph of the long-side surfaces of the particles of the blue pigment of Example 2, and Fig. 3B illustrates a SEM photograph of the cross-section of the particles of the blue pigment of Example 2.

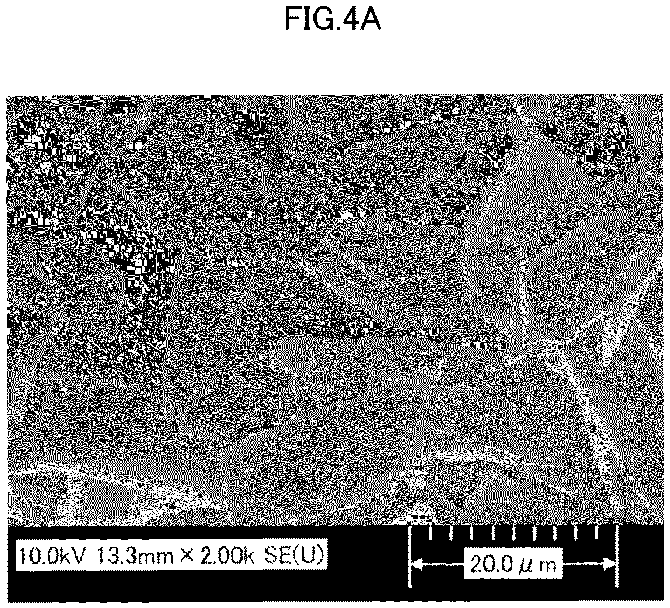

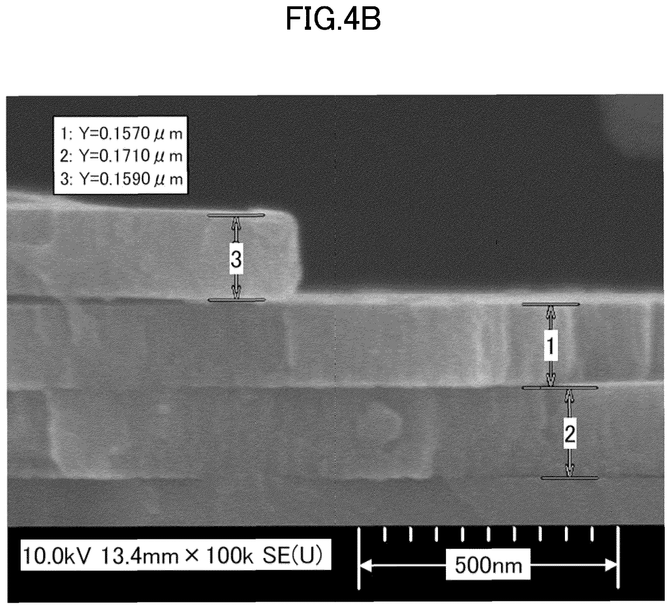

Fig. 4A illustrates a SEM photograph of the long-side surfaces of the particles of the blue pigment of Example 3, and Fig. 4B illustrates a SEM photograph of the cross-section of the particles of the blue pigment of Example 3.

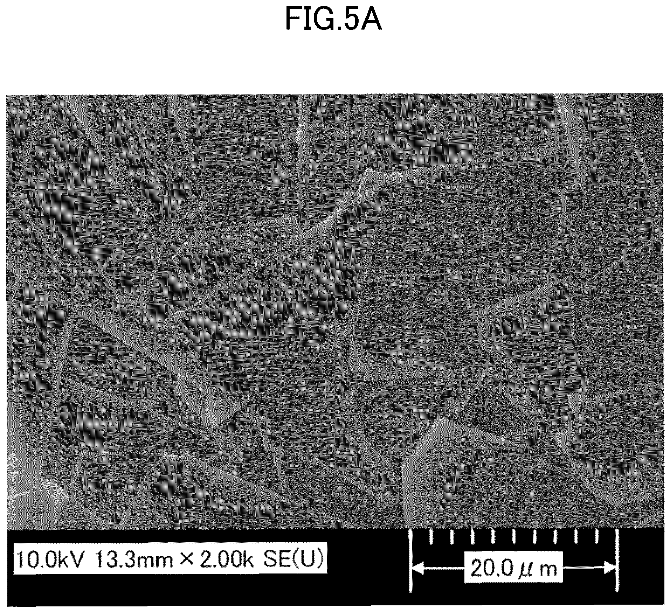

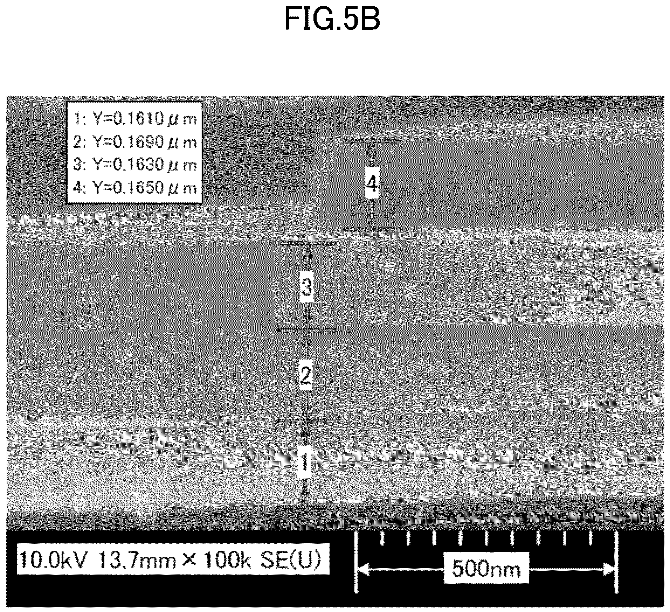

Fig. 5A illustrates a SEM photograph of the long-side surfaces of the particles of the blue pigment of Example 4, and Fig. 5B illustrates a SEM photograph of the cross-section of the particles of the blue pigment of Example 4.

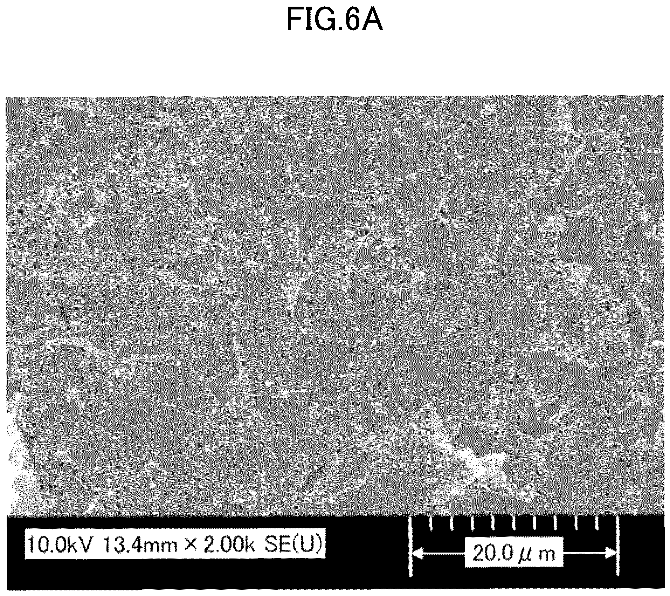

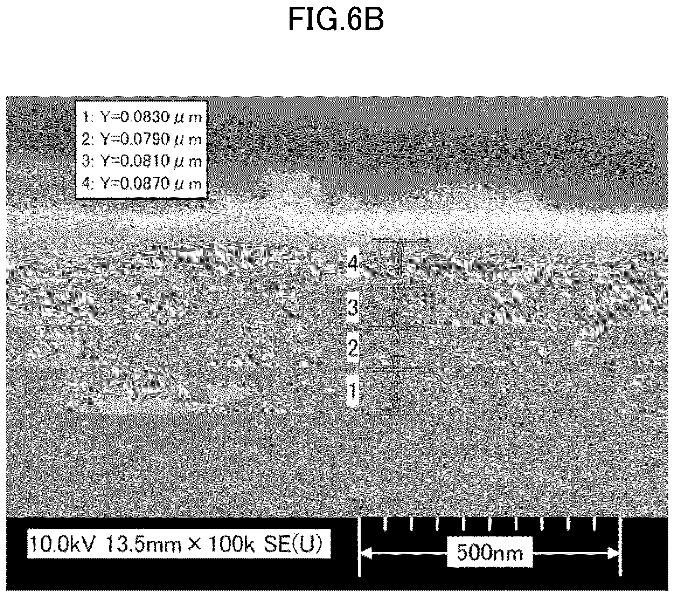

Fig. 6A illustrates a SEM photograph of the long-side surfaces of the particles of the titanium oxide pigment of Comparative Example 1, and Fig. 6B illustrates a SEM photograph of the cross-section of the particles of the titanium oxide pigment of Comparative Example 1.

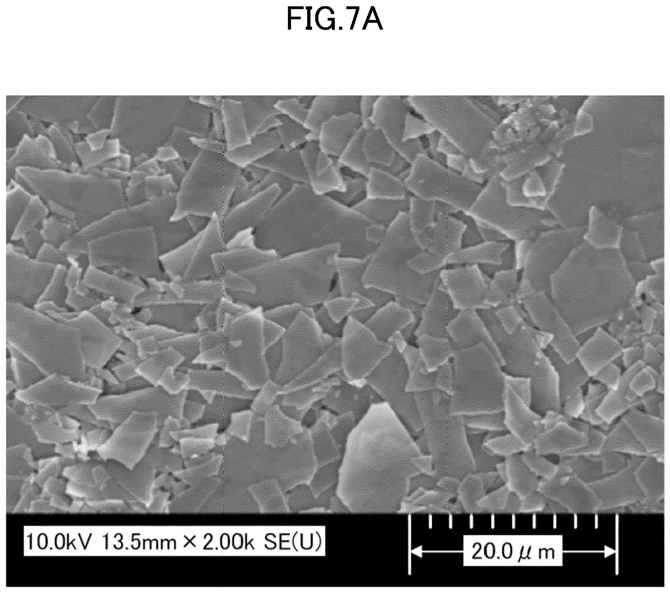

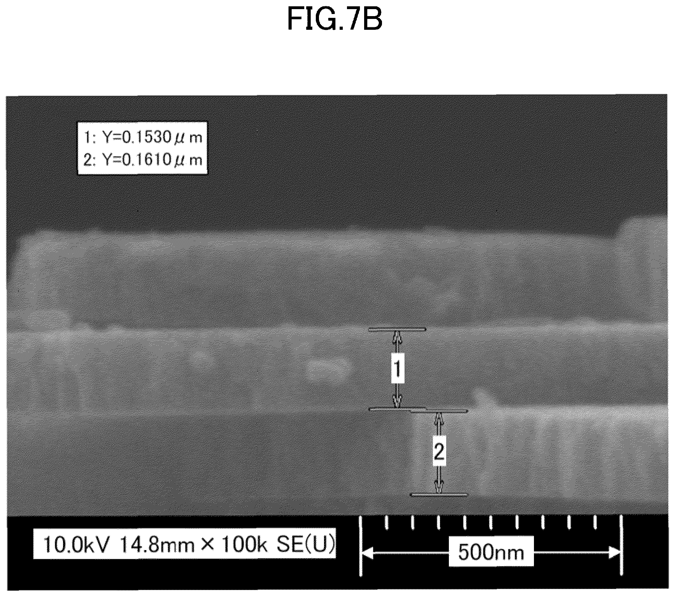

Fig. 7A illustrates a SEM photograph of the long-side surfaces of the particles of the titanium oxide pigment of Comparative Example 2, and Fig. 7B illustrates a SEM photograph of the cross-section of the particles of the titanium oxide pigment of Comparative Example 2.

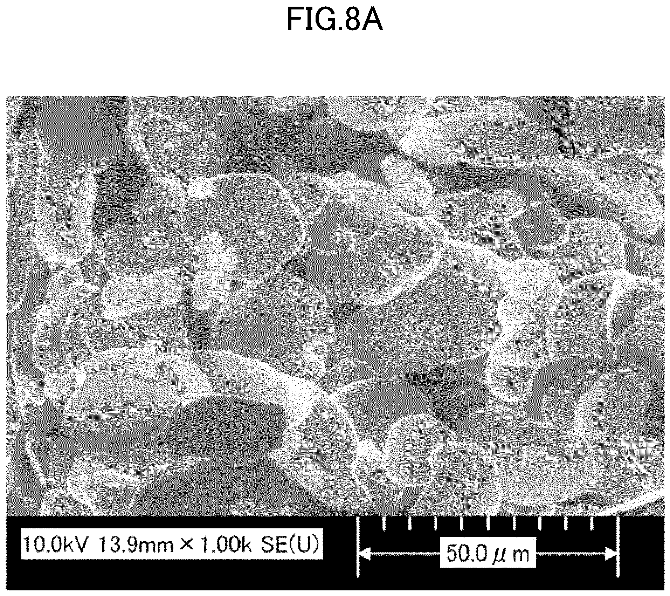

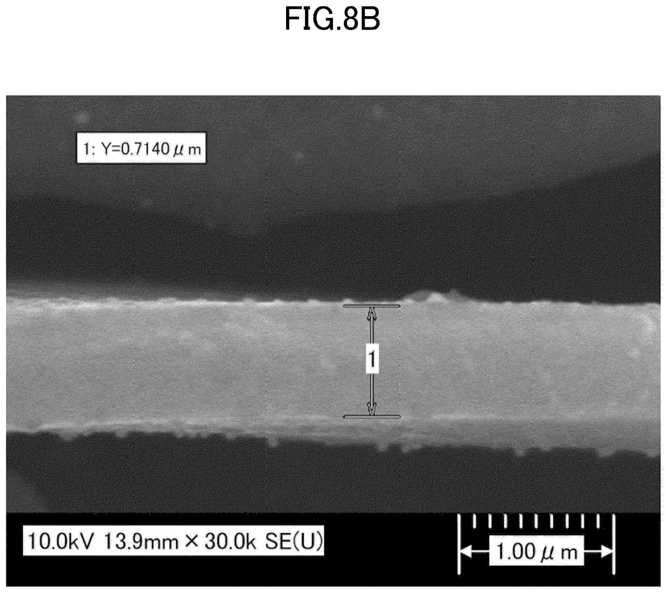

Fig. 8A illustrates a SEM photograph of the long-side surfaces of the particles of the blue pigment of Comparative Example 3, and Fig. 8B illustrates a SEM photograph of the cross-section of the particles of the blue pigment of Comparative Example 3.

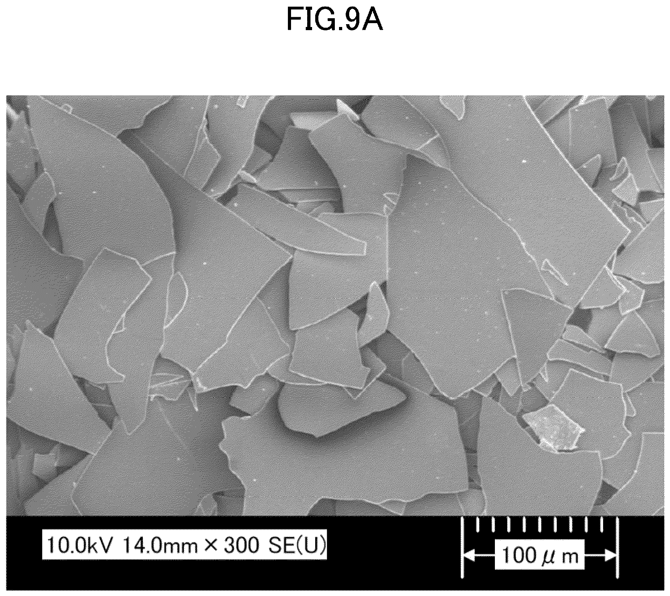

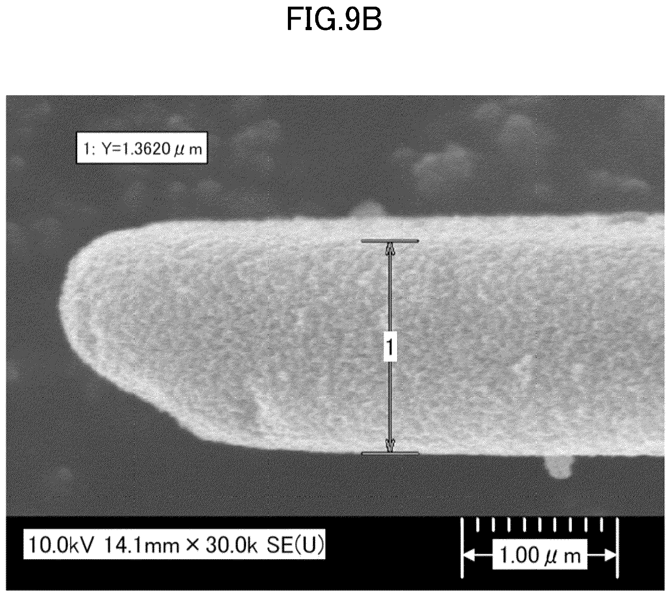

Fig. 9A illustrates a SEM photograph of the long-side surfaces of the particles of the blue pigment of Comparative Example 4, and Fig. 9B illustrates a SEM photograph of the cross-section of the particles of the blue pigment of Comparative

Example 4.

<Volume-based cumulative 50% point particle diameter (D50) >

The volume-based cumulative 50% point particle diameter (D50) of the scaly particles (pigment) was measured by a laser diffraction/scattering particle size distribution analyzer (device name: Laser Micron Sizer LMS-2000e, produced by SEISHIN ENTERPRISE CO., LTD., wet dispersion unit) according to laser diffractometry using the Fraunhofer approximation.

Next, the pigments of Examples 1 to 5 and Comparative Examples 1 to 2 were subjected to measurement of true density and atomic concentrations by energy dispersive X-ray spectroscopy (EDX) in the following manner. The results are presented in Table 1.

<True density>

A measuring sample was produced in the following manner.

A 10 percent by mass butyl acetate dispersion liquid of a corresponding pigment in an amount of 30 g was placed in a petri dish. After spontaneous sedimentation, the supernatant was removed. The resultant sediment was placed in a dryer, and dried at 120°C for 2 hours. After evaporating the solvent, the dried product was cooled to room temperature, and the dried powder was collected. The collected dried powder was subjected to crushing using an agate mortar, and coarse particles were removed by a sieve (opening: 180 $\mu$m). The resultant pigment was measured under the following conditions.

[Conditions]

Measuring device: continuous automatic powder true density measuring device MAT-7000 (produced by SEISHIN ENTERPRISE CO., LTD.)
The continuous automatic powder true density measuring device MAT-7000 is a device that measures true density of powder particles according to liquid phase displacement (pycnometer method).

Sample: 2.2 g to 2.4 g
Solvent: n-butanol
Degassing time: 10 minutes
Waiting time: 3 minutes
Drying time: 0 minutes
Number of measurements performed: once

<Measurement of atomic concentrations (composition ratio of Ti and O) by energy dispersive X-ray spectroscopy (EDX)>

Three to five drops of a 10 percent by mass butyl acetate dispersion liquid of a corresponding pigment were directly dripped onto a SEM sample stage by a pipette, followed by drying the dispersion liquid on the sample stage. Then, SEM observation of the scaly particles was performed. After focusing on the long-side surfaces of the scaly particles, the atomic concentrations of Ti and O were measured by EDX analysis under the following conditions.

[Conditions]

Energy dispersive X-ray spectrometer (EDX: Energy dispersive X-ray spectrometry, produced by HORIBA, Ltd.)
Pretreatment of observation sample: Pt sputtering for 10 seconds
Analysis conditions: accelerating voltage of 25 kV, current of 10 $\mu$A to 20 $\mu$A (adjusted so that the dead time was to be 20% to 30%), magnification of $\times$100 k, WD of 12 mm, and reading time of 120 seconds
The atomic concentrations of Ti and O relative to the total amount (total number of atoms) of Ti and O being 100% were determined from the peaks of the Ti K line and the O K line of the detected elements.

The measurement was performed at 10 points under the above measurement conditions, and the average value was determined as the atomic concentration.

(Formation of coating film)

-Formation of bar-coated coating film on black ABS substrate-

Each of the pigments of Examples 1 to 5 and Comparative Examples 1 to 3 was prepared into a 10 percent by mass butyl acetate dispersion liquid. The prepared dispersion liquid of the pigment was applied onto a 3 mm-thick black ABS substrate by a bar coater (#8, produced by Marukyo Giken K.K.) at room temperature (25°C). The applied dispersion liquid was dried at room temperature (25°C), thereby forming a bar-coated coating film.

In Comparative Example 4, a coating film was formed by a bar coater (#20, produced by Marukyo Giken K.K.).

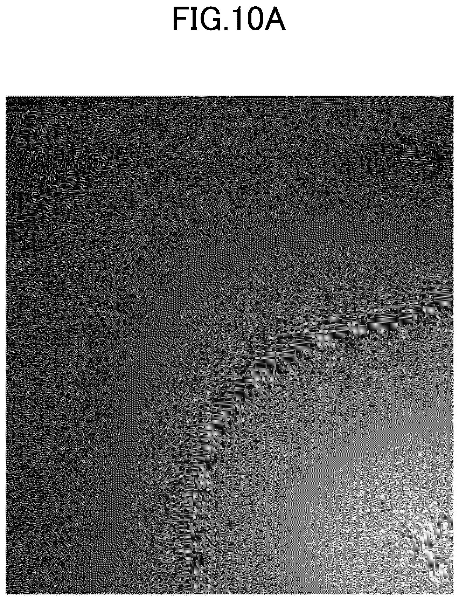

Fig. 10A illustrates a photograph of the coating film formed using the blue pigment of Example 1.

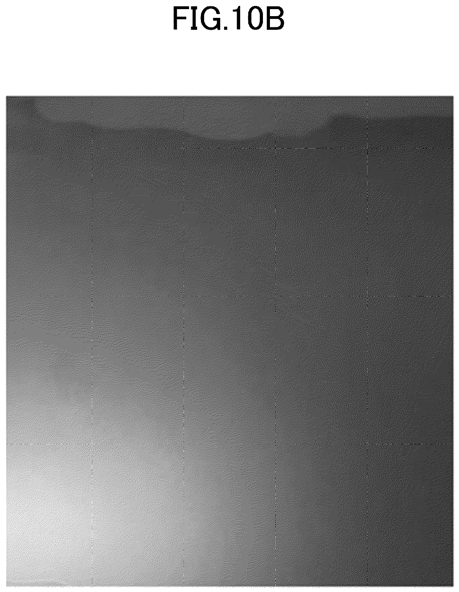

Fig. 10B illustrates a photograph of the coating film formed using the blue pigment of Example 2.

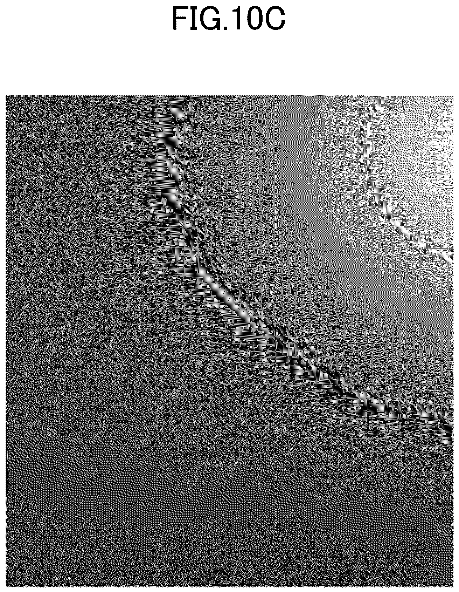

Fig. 10C illustrates a photograph of the coating film formed using the blue pigment of Example 3.

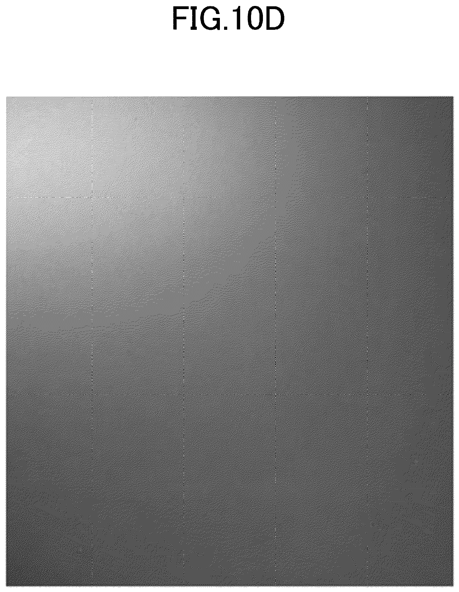

Fig. 10D illustrates a photograph of the coating film formed using the blue pigment of Example 4.

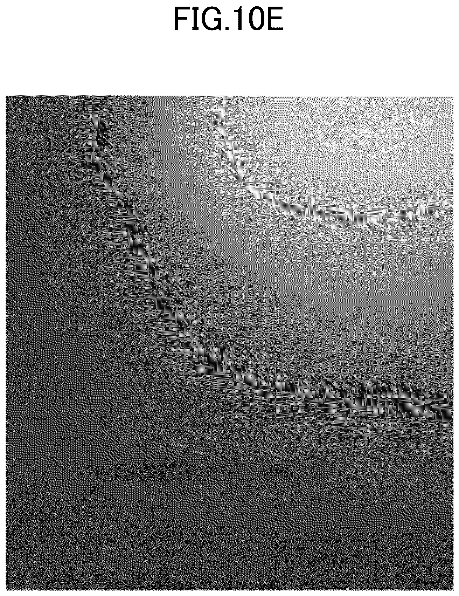

Fig. 10E illustrates a photograph of the coating film formed using the blue pigment of Example 5.

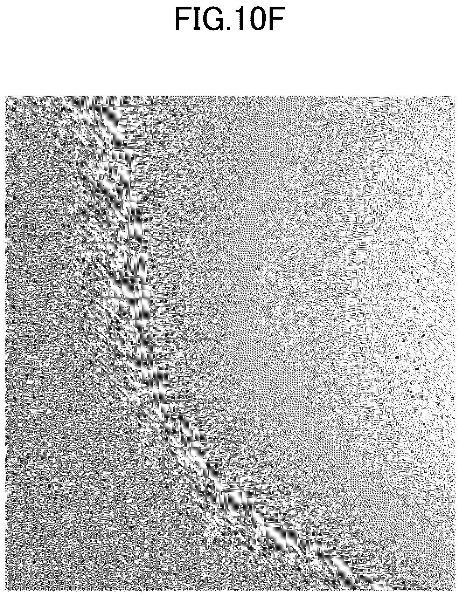

Fig. 10F illustrates a photograph of the coating film formed using the titanium oxide pigment of Comparative Example 1.

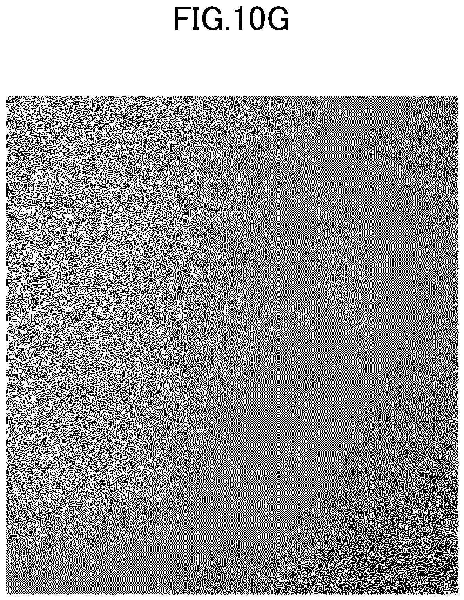

Fig. 10G illustrates a photograph of the coating film formed using the titanium oxide pigment of Comparative Example 2.

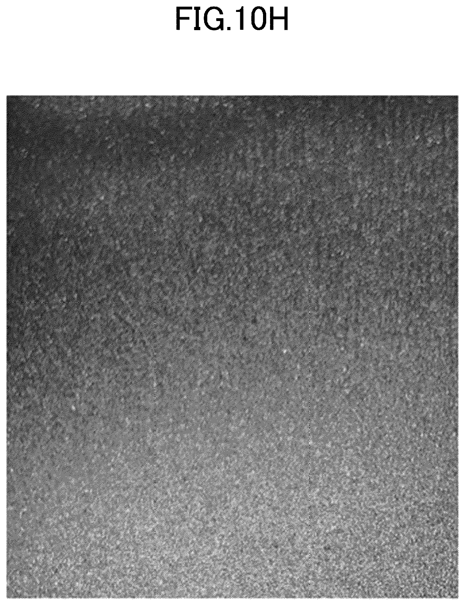

Fig. 10H illustrates a photograph of the coating film formed using the blue pigment of Comparative Example 3.

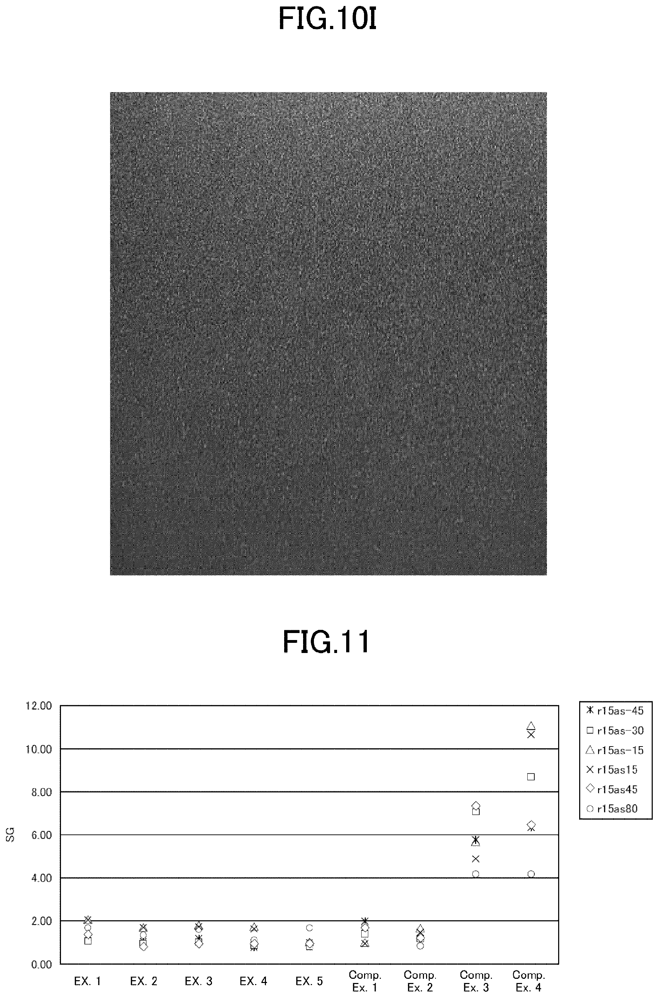

Fig. 10I is a photograph of the coating film formed using the blue pigment of Comparative Example 4.

-Formation of bar-coated coating film on transparent acrylic substrate-

Each of the pigments of Examples 1 to 4 and Comparative Examples 1 and 2 was prepared into a 10 percent by mass butyl acetate dispersion liquid. The prepared dispersion liquid of the pigment was applied onto a 3 mm-thick transparent acrylic substrate by a bar coater (#8, produced by Marukyo Giken K.K.) at room temperature (25°C). The applied dispersion liquid was dried at room temperature (25°C), thereby forming a bar-coated coating film.

The obtained coating film was subjected to measurement of total reflection, specular gloss, appearance, and color, and a sensory evaluation in the following manner. The results are presented in Tables 2 and 3, and Figs. 11 (appearance (SG: sparkle grade of particles)) and 12 (appearance (CV: color sparkle of particles)).

<Measurement of total reflection>

The spectrum of the total reflection of the coating film was measured in the following manner. The bar-coated surface was set as a measuring surface. After measuring a baseline using a standard white substrate prepared with barium sulfate, a spectrum of total reflection of a corresponding coated substrate was measured in a wavelength range of 300 nm to 800 nm by a UV-VIS-NIR spectrophotometer (SolidSpec-3700, produced by Shimadzu Corporation), and L*, a*, b*, and C* were determined from the obtained spectrum.

C* was calculated according to the following equation 1.

[Math. 2]

$$C^* = (a^{*2}+b^{*2})^{1/2}$$

(Equation 1)

<Measurement of specular gloss>

Specular gloss Gs (20°) at an incident angle of 20° and specular gloss Gs (60°) at an incident angle of 60° were measured by setting the bar-coated surface as a measuring surface, and measuring the measuring surface by a gloss meter (VG-7000, produced by NIPPON DENSHOKU INDUSTRIES CO., LTD.) according to a parallel light method complied with JIS Z8741 "Specular glossiness-Methods of measurement."

<Measurement of appearance and color>

Measurement of appearance (SG: sparkle grade of particles, CV: color sparkle of particles, C: coarseness) and color (L*, C*, and h) was performed by setting the bar-coated surface as a measuring surface and measuring the measuring surface by a portable multi-angle spectrophotometer (MA-T6, produced by X-Rite, Inc.).

The values of the appearance (SG: sparkle grade of particles, CV: color sparkle of particles) of Table 2 are the measurement values at a light source angle of 15° and a light-receiving angle of 15° (15as15) based on optical geometric conditions defined in the designated portable multi-angle spectrophotometer. The values of the color of Table 2 are the measurement values at a light source angle of 45° and a light-receiving angle of 45° (45as45) based on optical geometric conditions defined in the designated portable multi-angle spectrophotometer.

Fig. 11 depicts the angle dependency (with the varied light source angle and the fixed light-receiving angle) of SG (sparkle grade of particles) of the appearance. Note that the value of the appearance (SG: sparkle grade of particles) of Fig. 11 is the measurement value at the light source angle of -45°, -30°, -15°, 15°, 45°, or 80°, and the light-receiving angle of 15° based on optical geometric conditions defined in the designated portable multi-angle spectrophotometer.

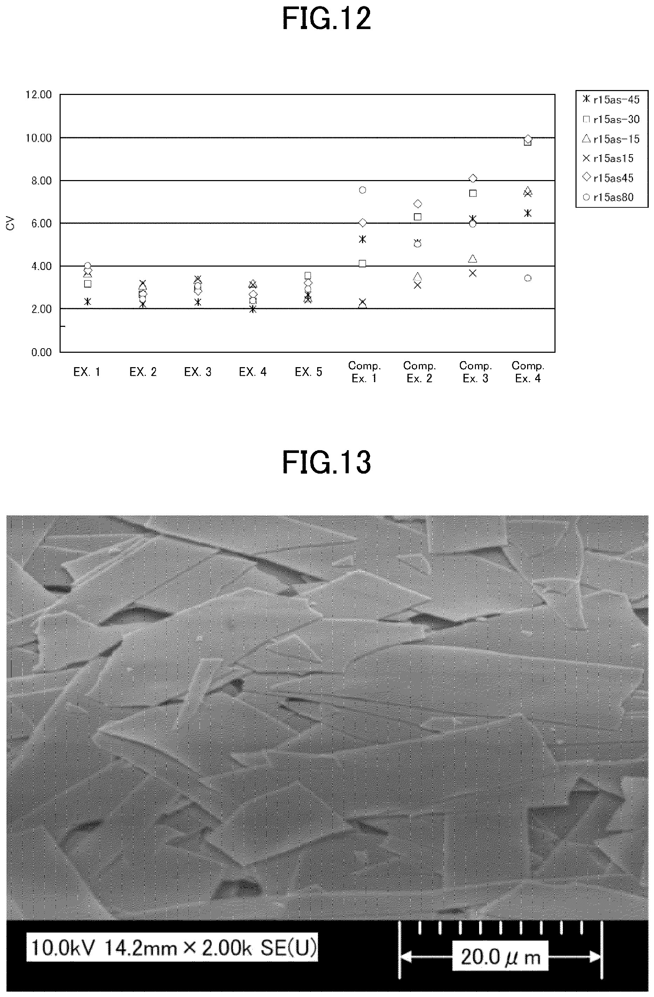

Fig. 12 depicts the angle dependency (with the varied light source angle and the fixed light-receiving angle) of CV (color sparkle of particles) of the appearance. Note that the value of the appearance (CV: color sparkle of particles) of Fig. 12 is the measurement value at the light source angle of -45°, -30°, -15°, 15°, 45°, or 80°, and the light-receiving angle of 15° based on optical geometric conditions defined in the designated portable multi-angle spectrophotometer.

<Sensory evaluation>

Coarseness of each coating film was evaluated based on the following criteria by five evaluators.

[Evaluation criteria of coarseness (seamlessness)]

Good: The presence of particles was not recognized with the naked eye.
Not good: The presence of particles was recognized with the naked eye.

[Table 2]

| | Bar-coated coating film (substrate: black ABS) | | | | | | | | | | | | Sensory evaluation |
|---|---|---|---|---|---|---|---|---|---|---|---|---|---|
| | Total reflection | | | | Specular gloss | | Appearance | | | Color | | | |
| | L* | a* | b* | C* | Gs (20°) | Gs (60°) | SG | CV | C | L* | C* | h | Coarseness |
| Ex. 1 | 43.04 | -2.24 | -33.04 | 33.12 | 11.8 | 35.2 | 2.08 | 3.74 | 1.34 | 13.92 | 15.10 | 263.39 | Good |
| Ex. 2 | 49.95 | -15.74 | -18.53 | 24.31 | 18.5 | 44.6 | 1.69 | 3.18 | 1.89 | 17.45 | 12.15 | 236.49 | Good |
| Ex. 3 | 51.42 | -15.23 | -18.14 | 23.69 | 18.7 | 42.8 | 1.77 | 3.34 | 1.69 | 17.01 | 11.53 | 234.29 | Good |
| Ex. 4 | 53.18 | -11.58 | -22.85 | 25.62 | 12.4 | 34.0 | 1.66 | 3.07 | 2.37 | 20.67 | 13.45 | 245.59 | Good |
| Ex. 5 | 43.24 | -4.90 | -18.85 | 19.48 | 8.0 | 38.7 | 0.96 | 2.40 | 1.54 | 23.29 | 13.90 | 247.76 | Good |
| Comp. Ex. 1 | 81.85 | -8.16 | 5.31 | 9.74 | 12.4 | 32.4 | 0.96 | 2.28 | 2.55 | 55.88 | 3.90 | 122.12 | Good |
| Comp. Ex. 2 | 67.11 | -9.22 | -21.61 | 23.49 | 4.1 | 9.9 | 1.45 | 3.06 | 1.83 | 52.19 | 9.86 | 236.78 | Good |
| Comp. Ex. 3 | 51.74 | -3.49 | -34.61 | 34.79 | 5.6 | 21.0 | 4.92 | 3.66 | 8.20 | 21.41 | 18.04 | 266.34 | Not good |
| Comp. Ex. 4 | 39.33 | -3.98 | -24.07 | 24.40 | 6.0 | 23.4 | 10.71 | 7.37 | 7.74 | 16.77 | 10.93 | 267.26 | Not good |

[Table 3]

| | Bar-coated coating film (substrate: transparent acrylic) | | | |
| --- | --- | --- | --- | --- |
| | Total reflection | | | |
| | L* | a* | b* | C* |
| Ex. 1 | 43.65 | 0.28 | -33.69 | 33.69 |
| Ex. 2 | 58.73 | -9.29 | -21.72 | 23.62 |
| Ex. 3 | 52.08 | -9.18 | -22.41 | 24.22 |
| Ex. 4 | 54.59 | -4.33 | -22.93 | 23.34 |
| Comp. Ex. 1 | 80.86 | -8.04 | 2.78 | 8.51 |
| Comp. Ex. 2 | 73.60 | -9.29 | -17.26 | 19.60 |

Next, the orientation of the coating films including the pigments of Example 4, Comparative Example 3, and Comparative Example 4, respectively, was observed on the glass plate in the following manner.

<Orientation on glass plate>

Each of the pigments of Example 4, Comparative Example 3, and Comparative Example 4 was prepared into a 10 percent by mass butyl acetate dispersion liquid. The prepared dispersion liquid was applied onto a glass plate by a bar coater (#8, produced by Marukyo Giken K.K.) at room temperature (25°C). The applied dispersion liquid was dried at room temperature (25°C), thereby forming a bar-coated coating film. The coating film of Comparative Example 4 was formed by a bar coater (#20, produced by Marukyo Giken K.K.).

The glass plate, on which the coating film had been formed, was cut to expose the cross-section of the scaly particles, thereby preparing a sample. The prepared sample was set on a 90°-inclinable sample table so that the cross-section of the sample was to be a top surface. At the time of measurement, the sample table was inclined by 30°, and the measurement was performed under the following conditions.

[Conditions]

Scanning electron microscope (SEM) HITACHI S-4700 (produced by Hitachi, Ltd.)
Pretreatment of observation sample: Pt sputtering for 10 seconds to 20 seconds
Observation conditions: accelerating voltage of 10 kV, magnification of × 2k

Fig. 13 illustrates a SEM photograph of the coating film including the blue pigment of Example 4.

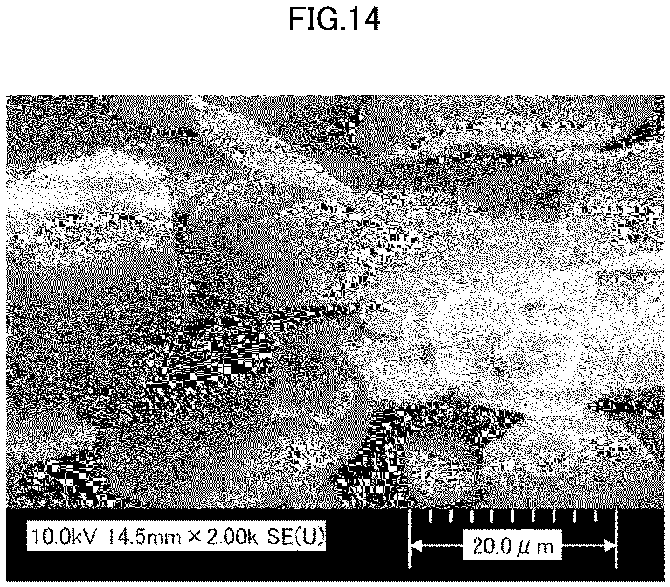

Fig. 14 illustrates a SEM photograph of the coating film including the blue pigment of Comparative Example 3.

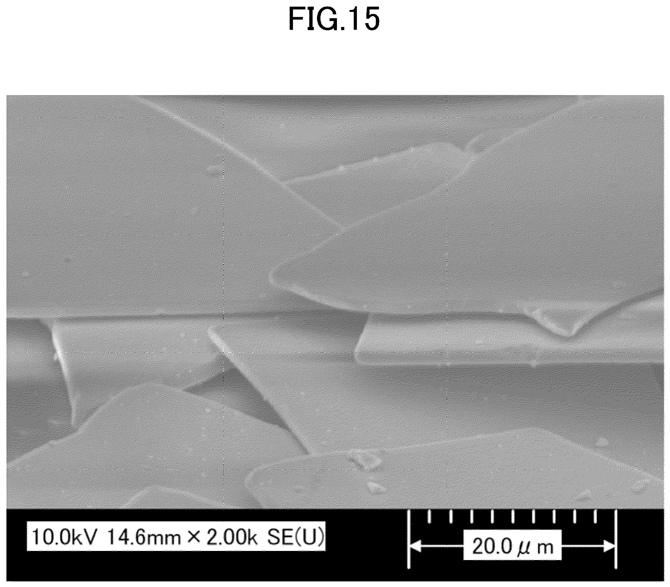

Fig. 15 illustrates a SEM photograph of the coating film including the blue pigment of Comparative Example 4.
It was found also from the photographs of Figs. 13 to 15 that the particles of the pigment of Example 4 were thin and had a high aspect ratio, and therefore the surface of the coating film was smoother than those of the pigments having thick particles (Comparative Examples 3 and 4), and coarseness was less likely to be observed on the coating film of Example 4.
The results of Table 2 indicated that, when Examples 1 to 5 were compared with Comparative Examples 3 and 4, the particles of the pigments of Examples 1 to 5 each having a small average thickness had seamless design properties without coarseness based on the data (appearance SG: sparkle grade of particles, CV: color sparkle of particles, C: coarseness, and sensory evaluation on coarseness) representing coarseness, and the particles of the pigments of Comparative Examples 3 and 4 each having a large average thickness left coarseness.
It was found from the results of Tables 2 and 3 that, when Examples were compared with Comparative Example 1, the coating films of Examples exhibited a blue color because the average thicknesses of the pigments of Examples were in the interference region of a blue color and the light was absorbed by the coating film having a low oxygen atomic concentration (a large amount of oxygen deficiency), and the coating film of Comparative Example 1 did not exhibit a blue color because the average thickness of the pigment of Comparative Example 1 was not in the interference region of the blue color, and light was absorbed by the coating film having a high oxygen concentration (a small amount of oxygen deficiency) based on the data (L*, a*, b*, and C* of total reflection, L*, C*, and h (hue angle) of color) that representing the color of blue. Further, it was found that, when Examples were compared with Comparative Example 2, the particles of the pigment of Comparative Example 2 had the average thickness in the interference region of the blue color, but the amount of light absorption was small compared to Examples because of a high oxygen concentration (a small amount of oxygen deficiency) and transmittance and reflection increased, based on the data (L*, a*, b*, and C* of total reflection, L*, C*, and h (hue angle) of color) representing the color of blue. As a result, light scattering was increased to increase a level of whiteness, and therefore the coating film of Comparative Example 2 exhibited whitish blue combining the whiteness with blue of the interference color.

By confirming the specular gloss in the results of Table 2, it was found that the coating films of Examples 1 to 5, although similarly blue-colored, had higher specular gloss than the coating films of Comparative Examples 3 and 4. It is assumed that the higher specular gloss of Examples 1 to 5 is due to an effect of using the thin scaly particles having a high aspect ratio as a pigment.

As presented in the above-described photographs of Figs. 13 to 15, when the thin scaly particles having a high aspect ratio are used as a pigment, the surface of the coating film becomes smooth compared with Comparative Examples 3 and 4. Thus, it is assumed that the seamless coating film without coarseness and the coating film having high specular gloss are attributed to the smoothness.

It was demonstrated from the results of Fig. 11 that, when Examples 1 to 5 and Comparative Examples 1 and 2 were compared with Comparative Examples 3 and 4, a variation in SG (sparkle grade of particles) depending on the angle was small. Specifically, the coating films of Examples 1 to 5 and Comparative Examples 1 and 2 had small variations (low angle dependency) in SG (sparkle grade of particles) when the coating films were viewed from various angles, compared with Comparative Examples 3 and 4. The low angle dependency of Examples 1 to 5 and Comparative Examples 1 and 2 is assumed to be due to an effect of using scaly particles having a small particle size, small thicknesses, and a high aspect ratio as the pigment. As presented in the above-described photographs of Figs. 13 to 15, when thin scaly particles having a high aspect ratio are used as the pigment, the surface of the coating film becomes smoother than those of Comparative Examples 3 and 4, and the seamless coating film without coarseness is obtained, and therefore it is assumed that the variation in SG is small when the coating film is viewed from various angles.

It was demonstrated from the results of Fig. 12 that, when Examples 1 to 5 were compared with Comparative Examples 1 to 4, a variation in CV (color sparkle of particles) depending on the angle was small. Specifically, the coating films of Examples 1 to 5 had small variations (low angle dependency) in CV (color sparkle of particles) when the coating films were viewed from various angles, compared with Comparative Examples 1 to 4. This is assumed to be due to the fact that the coating films of Examples 1 to 5 exhibit a blue color while suppressing light scattering, compared with Comparative Examples 1 and 2, due to the influence of the interference of the titanium oxide and the light absorption by the oxygen deficiency of the titanium oxide in addition to the pigment being thin scaly particles having a high aspect ratio. In comparison with Comparative Examples 3 and 4, as presented in the above-described photographs of Figs. 13 to 15, when thin scaly particles having a high aspect ratio are used as the pigment, the surface of the coating film becomes smoother than those of Comparative Examples 3 and 4. Thus, the seamless coating film without coarseness is obtained, and therefore it is assumed that a variation in CV is small even when the coating film is viewed from various angles.

As described above, it has been found that a coating film having small angle dependency of SG (sparkle grade of particles) and CV(color sparkle of particles) is obtained by using the pigment of the present invention.

It was found from the results of Tables 1 to 3 that Examples 1 to 5, which satisfied all of the features "titanium oxide is included, a volume-based cumulative 50% point particle diameter (D50) is 20 μm or less, an average thickness is 130 nm or greater and 170 nm or less, and a Ti atomic concentration is 25 at% or greater and 50 at% or less and an O atomic concentration is 50 at% or greater and 75 at% or less, where the Ti atomic concentration is a total number of Ti atoms relative to a total number of Ti and O atoms, and the O atomic concentration is a total number of O atoms relative to the total number of Ti and O atoms as determined by an elemental analysis performed by energy dispersive X-ray spectroscopy (EDX)" yielded the blue pigments, which had seamless design properties without coarseness and achieved an excellent bluish color regardless of a form of use (in a form of a powder, in a form of a film, or the like), compared with Comparative Examples 1 to 4 which did not satisfy at least some of the above features.

The present application is based on and claims priority to Japanese Patent Application No. 2022-180116, filed November 10, 2022, and the entire contents of Japanese Patent Application No. 2022-180116 are incorporated herein by reference.

**Claims**

1. A blue pigment comprising:
   titanium oxide,

   wherein a volume-based cumulative 50% point particle diameter (D50) of the blue pigment is 20 μm or less, and an average thickness of particles of the blue pigment is 130 nm or greater and 170 nm or less, and

wherein the blue pigment has a Ti atomic concentration of 25 at% or greater and 50 at% or less, and an O atomic concentration of 50 at% or greater and 75 at% or less, where the Ti atomic concentration is a total number of Ti atoms relative to a total number of Ti and O atoms, and the O atomic concentration is a total number of O atoms relative to the total number of Ti and O atoms as determined by an elemental analysis performed by energy dispersive X-ray spectroscopy (EDX).

2. The blue pigment according to claim 1,
   wherein the particles of the blue pigment have a single-layer structure.

3. The blue pigment according to claim 1 or 2,
   wherein the blue pigment has true density of 3.2 g/cm$^3$ or greater.

4. The blue pigment according to any one of claims 1 to 3,
   wherein the particles of the blue pigment are scaly particles.

5. A dispersion liquid comprising:
   the blue pigment according to any one of claims 1 to 4.

6. A coating material comprising:
   the blue pigment according to any one of claims 1 to 4.

7. An ink comprising:
   the blue pigment according to any one of claims 1 to 4.

8. A coating film comprising:
   the blue pigment according to any one of claims 1 to 4.

9. The coating film according to claim 8,
   wherein, when the coating film is applied to a substrate, b* and a* of a spectrum of total reflection of the coating film are -17 or less and 5 or less, respectively.

10. A method of producing a coating film, the method comprising:
    applying the dispersion liquid of claim 5 onto a substrate.

11. A method of producing a coating film, the method comprising:
    applying the coating material of claim 6 onto a substrate.

12. A method of producing a coating film, the method comprising:
    applying the ink of claim 7 onto a substrate.

# FIG.1

# FIG.2A

10.0kV 13.2mm × 2.00k SE(U)    20.0 μm

# FIG.2B

1: Y=0.1350 μm
2: Y=0.1470 μm
3: Y=0.1330 μm

10.0kV 13.5mm × 100k SE(U)

500nm

# FIG.3A

10.0kV 13.2mm × 2.00k SE(U)      20.0 $\mu$ m

# FIG.3B

# FIG.4A

10.0kV 13.3mm × 2.00k SE(U)    20.0 $\mu$ m

# FIG.4B

1: Y=0.1570 $\mu$ m
2: Y=0.1710 $\mu$ m
3: Y=0.1590 $\mu$ m

10.0kV 13.4mm × 100k SE(U)

500nm

# FIG.5A

10.0kV 13.3mm × 2.00k SE(U)    20.0 μm

# FIG.5B

1: Y=0.1610 μm
2: Y=0.1690 μm
3: Y=0.1630 μm
4: Y=0.1650 μm

10.0kV 13.7mm × 100k SE(U)   500nm

# FIG.6A

10.0kV 13.4mm × 2.00k SE(U)    20.0 μ m

# FIG.6B

# FIG.7A

10.0kV 13.5mm × 2.00k SE(U)    20.0 μm

# FIG.7B

1: Y=0.1530 μm
2: Y=0.1610 μm

10.0kV 14.8mm × 100k SE(U)    500nm

# FIG.8A

# FIG.8B

# FIG.9A

10.0kV 14.0mm × 300 SE(U)    100 μ m

# FIG.9B

# FIG.10A

FIG.10B

# FIG.10C

FIG.10D

# FIG.10E

# FIG.10F

# FIG.10G

# FIG.10H

# FIG.10I

# FIG.11

# FIG.12

Legend:
- ✳ r15as-45
- □ r15as-30
- △ r15as-15
- ✕ r15as15
- ◇ r15as45
- ○ r15as80

# FIG.13

10.0kV 14.2mm × 2.00k SE(U)     20.0 μm

# FIG.14

10.0kV 14.5mm × 2.00k SE(U)    20.0 μm

# FIG.15

10.0kV 14.6mm × 2.00k SE(U)　　20.0 μm

## INTERNATIONAL SEARCH REPORT

| International application No. |
|---|
| **PCT/JP2023/041007** |

| A. | CLASSIFICATION OF SUBJECT MATTER |
|---|---|

*C09C 1/36*(2006.01)i; *C01G 23/04*(2006.01)i; *C09D 7/61*(2018.01)i; *C09D 11/037*(2014.01)i; *C09D 11/17*(2014.01)i; *C09D 11/32*(2014.01)i; *C09D 201/00*(2006.01)i

FI: C09C1/36; C09D201/00; C09D11/32; C09D7/61; C09D11/17; C09D11/037; C01G23/04 B

According to International Patent Classification (IPC) or to both national classification and IPC

| B. | FIELDS SEARCHED |
|---|---|

Minimum documentation searched (classification system followed by classification symbols)

C09C1/36; C01G23/04; C09D7/61; C09D11/037; C09D11/17; C09D11/32; C09D201/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2004-67655 A (NIPPON KOKEN KOGYO KK) 04 March 2004 (2004-03-04) entire text | 1-12 |
| A | CN 109574070 A (QILU UNIVERSITY OF TECHNOLOGY) 05 April 2019 (2019-04-05) entire text | 1-12 |
| A | JP 2012-211030 A (OSAKA GAS CO LTD) 01 November 2012 (2012-11-01) entire text | 1-12 |
| A | JP 10-194741 A (ISHIHARA SANGYO KAISHA LTD) 28 July 1998 (1998-07-28) entire text | 1-12 |
| A | JP 2-173162 A (DEPOSITION SCIENCES, INC.) 04 July 1990 (1990-07-04) entire text | 1-12 |
| A | JP 2003-528168 A (ECKART GMBH & CO. KG) 24 September 2003 (2003-09-24) entire text | 1-12 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 January 2024** | **30 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/041007**

| Patent document cited in search report | | | Publication date (day/month/year) | Patent family member(s) | | | Publication date (day/month/year) |
|---|---|---|---|---|---|---|---|
| JP | 2004-67655 | A | 04 March 2004 | US | 2005/0061205 | A1 | |
| | | | | WO | 2003/016409 | A1 | |
| | | | | EP | 1424372 | A1 | |
| | | | | CN | 1541255 | A | |
| CN | 109574070 | A | 05 April 2019 | (Family: none) | | | |
| JP | 2012-211030 | A | 01 November 2012 | (Family: none) | | | |
| JP | 10-194741 | A | 28 July 1998 | (Family: none) | | | |
| JP | 2-173162 | A | 04 July 1990 | US | 4879140 | A | |
| | | | | EP | 370701 | A1 | |
| JP | 2003-528168 | A | 24 September 2003 | US | 2003/0075079 | A1 | |
| | | | | WO | 2001/057287 | A1 | |
| | | | | EP | 1252355 | A1 | |

Form PCT/ISA/210 (patent family annex) (January 2015)

**EP 4 600 312 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020076071 A
- JP 2021085001 A
- JP 2022180116 A